(19) Europäisches Patentamt
European Patent Office
Office européen des brevets

(11) **EP 1 798 950 A1**

(12) **EUROPEAN PATENT APPLICATION**
published in accordance with Art. 158(3) EPC

(43) Date of publication:
**20.06.2007 Bulletin 2007/25**

(51) Int Cl.:
***H04N 1/387*** (2006.01)

(21) Application number: **05785784.9**

(22) Date of filing: **22.09.2005**

(86) International application number:
**PCT/JP2005/017517**

(87) International publication number:
**WO 2006/035677 (06.04.2006 Gazette 2006/14)**

(84) Designated Contracting States:
**DE ES FR GB IT**

(30) Priority: **29.09.2004 JP 2004284389**

(71) Applicant: **Oki Electric Industry Company, Limited**
**Tokyo 105-8460 (JP)**

(72) Inventor: **SUZAKI, Masahiko**
**Oki Electric Industry Co., Ltd.**
**Tokyo 1058460 (JP)**

(74) Representative: **Betten & Resch**
**Patentanwälte,**
**Theatinerstrasse 8**
**80333 München (DE)**

(54) **IMAGE PROCESSING METHOD AND IMAGE PROCESSING DEVICE**

(57) This invention provides an image processing method and image processing device capable of detecting a falsification with high accuracy.

A watermarked image inputting part 200 includes: a watermark information extracting part 220 for detecting a superposing position of a superposed pattern from a pattern-superposed image having an identifiable pattern superposed on an original image; and an input image deforming part 230 for creating a corrected image of a pattern-superposed image 260 based on information on the detected superposing position. Since an image having a printed sheet scanned is corrected based on the position information on the signal embedded at the time of printing, an image before printing can be restored without distortion and stretching from the image scanned from a printed matter. Accordingly, the correlation of the position between the images can be determined with high accuracy and further a high-performance detection of falsification can be performed.

**FIG.27**

**Description**

**BACKGROUND OF THE INVENTION**

**FIELD OF THE INVENTION**

The present invention relates to an image processing method and image processing device capable of checking a falsification of a printed ledger sheet on the side that has received the ledger sheet.

**DESCRIPTION OF THE RELATED ART**

As a technology of checking a falsification of the printed ledger sheet on the side that has received the ledger sheet, there is disclosed in Japanese Patent Laid-open Publication No. 2000-232573 "PRINTER, PRINTING METHOD AND RECORDING MEDIUM". In the technology disclosed in this document, in printing print data on a printed matter including ledger sheet, an electronic watermark corresponding to the print data is printed as well as the above print data. Thereby the printed file can be precisely copied only by seeing the printed matter to judge whether the printing result is falsified or not based on the information on the electronic watermark printed on the printed matter. The judgment of the falsification is carried out by comparing the printing result with what is printed by the electronic watermark.

In the conventional method, however, it is necessary to compare the contents of printing retrieved from the electronic watermark with the contents of printing printed on the sheet visually so as to judge the falsification. This has the following problems. First, it is difficult to process a large amount of ledger sheets in a short time with the visual judgment. Second, since it is necessary to compare by reading the contents of printing letter by letter, the falsification may be overlooked due to human error. In the conventional method, a falsification cannot be detected with high accuracy due to such problems.

**SUMMARY OF THE INVENTION**

The present invention has been achieved in view of the aforementioned problems. An object of the present invention is to provide a novel and improved image processing method and image processing device capable of detecting a falsification with high accuracy.

To solve the problems, according to the first aspect of the present invention, there is provided an image processing device comprising: a detecting part for detecting a superposing position of a superposed pattern from a pattern-superposed image having an identifiable pattern superposed on an original image; and a corrected image creating part for creating a corrected image of the pattern-superposed image based on information on the detected superposing position.

With such a configuration, since an image having a printed sheet scanned is corrected based on the position information on the signal embedded at the time of printing, an image before printing can be restored without distortion and stretching from the image scanned from a printed matter. Accordingly, the correlation of the position between the images can be determined with high accuracy and further a high-performance detection of falsification can be performed. It should be noted that the pattern-superposed image may be an image itself output by superposing the identifiable pattern or an image scanned by an input device such as scanner by printing the superposed identifiable pattern as a printed matter (ledger sheet, etc.).

The image processing device according to the present invention can be applied as follows.

For example, the identifiable pattern may be superposed at a well-known interval on the whole of the original image. Or, the identifiable pattern may be superposed at even intervals in the vertical and horizontal directions on the whole of the original image.

As the method of detecting the superposing position by the detecting part, the following method is applicable. As the first example, the detecting part may: perform collinear approximation for a pair of position information arranged in a horizontal direction and a pair of position information arranged in a vertical direction with regard to the position information on the identifiable pattern detected from the pattern-superposed image; and calculate an intersection of an approximation line in a horizontal direction and an approximation line in a vertical direction to detect the intersection as the superposing position of the pattern superposed on the original image.

As the second example, the detecting part may: perform collinear approximation for a pair of position information arranged in a horizontal direction and a pair of position information arranged in a vertical direction with regard to the position information on the identifiable pattern detected from the pattern-superposed image; replace an inclination of the approximation line in the horizontal direction by an average of the approximation line and another line in the horizontal direction in the vicinity thereof (for example, adjacent thereto); replace an inclination of the approximation line in the vertical direction by an average of the approximation line and another line in the vertical direction in the vicinity thereof (for example, adjacent thereto); and calculate an intersection of an approximation line in a horizontal direction and an approximation line in a vertical direction to detect the intersection as the superposing position of the pattern superposed on the original image.

As the third example, the detecting part may: perform collinear approximation for a pair of position information arranged in a horizontal direction and a pair of position information arranged in a vertical direction with regard to the position information on the identifiable pattern detected from the pattern-superposed image; replace a position in a vertical direction of the approximation line in the horizontal direction by an average of the approximation line and a position in a vertical direction of another line in the horizontal direction in the vicinity thereof (for example, adjacent thereto); replace a position in a horizontal direction of the approximation line in the vertical direction by an average of the approximation line and a position in a horizontal direction of another line in the vertical direction in the vicinity thereof (for example, adjacent thereto); and calculate an intersection of an approximation line in a horizontal direction and an approximation line in a vertical direction to detect the intersection as the superposing position of the pattern superposed on the original image.

On the other hand, the corrected image creating part may create a corrected image of the pattern-superposed image so that the superposing position detected by the detecting part is arranged at a well-known interval in vertical and horizontal directions and deforms the pattern-superposed image.

Or, there may be further provided a falsification judging part for judging a falsification of the image. In other words, there may be configured as that: an image feature of an arbitrary area of the original image and position information on the area are recorded as visible or invisible information in the original image; the detecting part retrieves the image feature and the position information from the pattern-superposed image; and the falsification judging part judges the difference as a falsification between the retrieved image feature and an image feature at the same position of the deformed pattern-superposed image.

Or, there may be configured as that: an image feature of an arbitrary area of the original image and position information on the area are recorded separately from the original image; and a falsification judging part judges the difference as a falsification between the recorded image feature and an image feature at the same position of the deformed pattern-superposed image.

Also, to solve the problems, according to the second aspect of the present invention, there is provided an image processing method comprising: a detecting step for detecting a superposing position of a superposed pattern from a pattern-superposed image having an identifiable pattern superposed on an original image; and a corrected image creating step for creating a corrected image of the pattern-superposed image based on information on the detected superposing position.

With such a method, since an image having a printed sheet scanned is corrected based on the position information on the signal embedded at the time of printing, an image before printing can be restored without distortion and stretching from the image scanned from a printed matter. Accordingly, the correlation of the position between the images can be determined with high accuracy and further a high-performance detection of falsification can be performed. It should be noted that the pattern-superposed image may be an image itself output by superposing the identifiable pattern or an image scanned by an input device such as scanner by printing the superposed identifiable pattern as a printed matter (ledger sheet, etc.).

The image processing method according to the present invention can be applied as follows.

For example, the identifiable pattern may be superposed at a well-known interval on the whole of the original image. Or, the identifiable pattern may be superposed at even intervals in the vertical and horizontal directions on the whole of the original image.

As the method of detecting the superposing position in the detecting step in more detail, the following method is applicable. As the first example, in the detecting step: there may be performed collinear approximation for a pair of position information arranged in a horizontal direction and a pair of position information arranged in a vertical direction with regard to the position information on the identifiable pattern detected from the pattern-superposed image; and there may be calculated an intersection of an approximation line in a horizontal direction and an approximation line in a vertical direction to detect the intersection as the superposing position of the pattern superposed on the original image.

As the second example, in the detecting step: there may be performed collinear approximation for a pair of position information arranged in a horizontal direction and a pair of position information arranged in a vertical direction with regard to the position information on the identifiable pattern detected from the pattern-superposed image; there may be replaced an inclination of the approximation line in the horizontal direction by an average of the approximation line and another line in the horizontal direction in the vicinity thereof (for example, adjacent thereto); there may be replaced an inclination of the approximation line in the vertical direction by an average of the approximation line and another line in the vertical direction in the vicinity thereof (for example, adjacent thereto); there may be calculated an intersection of an approximation line in a horizontal direction and an approximation line in a vertical direction to detect the intersection as the superposing position of the pattern superposed on the original image.

As the third example, in the detecting step: there may be performed collinear approximation for a pair of position information arranged in a horizontal direction and a pair of position information arranged in a vertical direction with regard to the position information on the identifiable pattern detected from the pattern-superposed image; there may be replaced a position in a vertical direction of the approximation line in the horizontal direction by an average of the approximation line and a position in a vertical direction of another line in the horizontal direction in the vicinity thereof (for example, adjacent thereto); there may be replaced a position in a horizontal direction of the approximation line in the vertical direction by an average of the approximation line and a position in a horizontal direction of another line in the vertical direction in the vicinity thereof (for example, adjacent thereto); and there may be calculated an intersection of an approximation line in a horizontal direction and an approximation line in a vertical direction to detect the intersection as the superposing position of the pattern superposed on the original image.

In the corrected image creating step, on the other hand, there may be created a corrected image of the pattern-superposed image so that the superposing position detected in the detecting step is arranged at a well-known interval in vertical and horizontal directions and deforms the pattern-superposed image.

Or, there may be further provided a falsification judging step for judging a falsification of the image. In other words, there may be configured as that: an image feature of an arbitrary area of the original image and position information on the area are recorded as visible or invisible information in the original image; in the detecting step there are retrieved the image feature and the position information from the pattern-superposed image; and in a falsification judging step the difference is judged as a falsification between the retrieved image feature and an image feature at the same position of the deformed pattern-superposed image.

Further, there may be configured as that: an image feature of an arbitrary area of the original image and position information on the area are recorded separately from the original image; and in a falsification judging step the difference is judged as a falsification between the recorded image feature and an image feature at the same position of the deformed pattern-superposed image.

According to another aspect of the present invention, there is provided program for making a computer function as the above image processing device and provided a recording medium having the program recorded and capable of being read by a computer. Here, the program may be described by any program language. As the recording medium, there are applicable: the recording medium currently used as a recording medium capable of recording program such as CD-ROM, DVD-ROM, flexible disk; and any recording media to be used in a future.

According to the present invention, as described above, since an image having a printed sheet scanned is corrected based on the position information on the signal embedded at the time of printing, an image before printing can be restored without distortion and stretching from the image scanned from a printed matter. Accordingly, the correlation of the position between the images can be determined with high accuracy and further a high-performance detection of falsification can be performed.

## BRIEF DESCRIPTION OF THE DRAWINGS

The above and other features of the invention and the concomitant advantages will be better understood and appreciated by persons skilled in the field to which the invention pertains in view of the following description given in conjunction with the accompanying drawings which illustrate preferred embodiments.

Fig. 1 is an explanatory diagram of configurations of a watermark information embedding device and a watermark information detecting device.
Fig. 2 is a flowchart of a process in a watermarked document image synthesizing part 13.
Fig. 3A is an explanatory diagram of a unit A as an example of a watermark signal.
Fig. 3B is an explanatory diagram of unit B as an example of a watermark signal.
Fig. 4 is a sectional view of a change of a pixel value in Fig. 3A seen from the direction of arctan (1/3).
Fig. 5A is an explanatory diagram of a unit C as an example of a watermark signal.
Fig. 5B is an explanatory diagram of a unit D an example of a watermark signal.
Fig. 5C is an explanatory diagram of a unit E an example of a watermark signal.
Fig. 6A is an explanatory diagram showing the case where the unit E is defined as a background unit arranged closely to form a background of the document image.
Fig. 6B is an explanatory diagram of an example of embedding the unit A in the background image of Fig. 6A.
Fig. 6C is an explanatory diagram of an example of embedding the unit B in the background image of Fig. 6A.
Fig. 7A is an explanatory diagram showing an example of a symbol embedding method in the document image.
Fig. 7B is an explanatory diagram showing an example of a symbol embedding method in the document image.
Fig. 7C is an explanatory diagram showing an example of a symbol embedding method in the document image.
Fig. 8 is a flowchart of a method of embedding confidential information in the document image.
Fig. 9 is an explanatory diagram of the method of embedding confidential information in the document image.
Fig. 10 is an explanatory diagram of the watermarked document image.

Fig. 11 is an explanatory diagram with a part of Fig. 10 partially enlarged.

Fig. 12 is a flowchart of a process of a watermark detecting part 32 in a first embodiment.

Fig. 13 is an explanatory diagram of a signal detection filtering step (step S310) in the first embodiment.

Fig. 14 is an explanatory diagram of a signal position searching step (step S320) in the first embodiment.

Fig. 15 is an explanatory diagram of a signal border determining step (step S340) in the first embodiment.

Fig. 16 is an explanatory diagram of information restoration step (step S305).

Fig. 17 is an explanatory diagram of a flow of process of a method of restoring a data code.

Fig. 18 is an explanatory diagram of an example of a method of restoring a data code.

Fig. 19 is an explanatory diagram of an example of a method of restoring a data code.

Fig. 20 is an explanatory diagram of configurations of a watermark information embedding device and a watermark information detecting device in a fifth embodiment.

Fig. 21 is a flowchart of a process of a falsification judging part 33.

Fig. 22 is an explanatory diagram of feature quantity comparing step (step S450).

Fig. 23 is an explanatory diagram of feature quantity comparing step (step 5450).

Fig. 24 is an explanatory diagram of an example of a detected signal unit position.

Fig. 25 is an explanatory diagram of an example of an uneven array of the detected signal unit position.

Fig. 26 is an explanatory diagram of a configuration of a watermarked image outputting part.

Fig. 27 is an explanatory diagram of a configuration of a watermarked document inputting part.

Fig. 28 is an explanatory diagram of the watermarked image.

Fig. 29 is a flowchart of an operation of an input image deforming part.

Fig. 30 is an explanatory diagram of an example of a detected signal unit position.

Fig. 31 is an explanatory diagram of an example of detecting an approximation line.

Fig. 32 is an explanatory diagram of an example of a result of collinear approximation.

Fig. 33A is an explanatory diagram of the state before correction of inclination.

Fig. 33B is an explanatory diagram of the state after correction of inclination.

Fig. 34A is an explanatory diagram of the state before correction of position.

Fig. 34B is an explanatory diagram of the state after correction of position.

Fig. 35 is an explanatory diagram of an example of intersection of lines.

Fig. 36A is an explanatory diagram of an example of correlation between an input image and a corrected image of Fig. 36B.

Fig. 36B is an explanatory diagram of an example of correlation between a corrected image and an input image of Fig. 36A.

Fig. 37A is an explanatory diagram of an example of correlating method between the input image and the corrected image of Fig. 37B.

Fig. 37B is an explanatory diagram of an example of correlating method between the corrected image and the input image of Fig. 37A.

Fig. 38 is an explanatory diagram of an example of detecting a falsification.

## DETAILED DESCRIPTION OF THE PREFERRED EMBODIMENTS

Hereinafter, the preferred embodiment of the present invention will be described in reference to the accompanying drawings. Same reference numerals are attached to components having same functions in following description and the accompanying drawings, and a description thereof is omitted.

(First Embodiment)

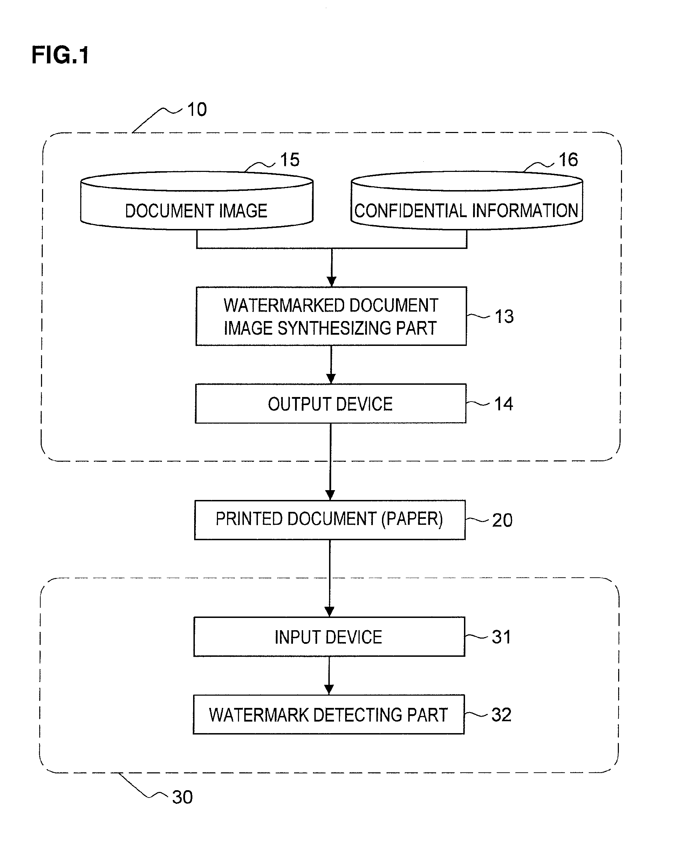

Fig. 1 is an explanatory diagram of configurations of a watermark information embedding device and a watermark information detecting device according to this embodiment.

(Watermark Information Embedding Device 10)

A watermark information embedding device 10 is a device for configuring a watermarked document image based on a document image and confidential information to be embedded in a document, to print on a paper medium. The watermark information embedding device 10 is configured by a watermarked document image synthesizing part 13 and an output device 14 as shown in Fig. 1. A document image 15 is an image created by a word-processing tool, etc. Confidential information 16 is information to be embedded by a format other than a letter (string, image and voice data) on a paper medium.

A white pixel area in the document image 15 is a part where there is no printing while a black pixel area is a part where black ink is applied. However, in this embodiment, although there will be described assuming that the printing is performed by a black ink (monochrome) on white paper, the present invention is not restricted to this example and also applicable to the case of performing a color printing (multichrome).

The watermarked document image synthesizing part 13 creates a watermarked document image by overlapping the document image 15 with the confidential information 16. The watermarked document image synthesizing part 13 performs N-dimensional coding (N is 2 or more) on the confidential information 16 digitized and inverted into numeric value to allocate each symbol of a code word to signals prepared in advance. The signals express a wave with arbitrary direction and wavelength by arranging a dot in a rectangular area with an arbitrary size and the symbol is allocated to the direction and wavelength of the wave. In the watermarked document image, these signals are arranged on the image according to a certain rule.

The output device 14 is an output device such as printer and prints the watermarked document image on a paper medium. The watermarked document image synthesizing part 13 may be realized as one function in a printer driver.

A printed document 20 is a printed matter having the confidential information 16 embedded in the original document image 15 and physically stored and managed.

(Watermark Information Detecting Device 30)

A watermark information detecting device 30 is a device for scanning the document printed on a paper medium as an image to restore the embedded confidential information 16. The watermark information detecting device 30 is configured by an input device 31 and a watermark detecting part 32 as shown in Fig. 1.

The input device 31 is an input device such as scanner and scans the document 20 printed on a paper medium as a gray image with multiple tone in a computer. The watermark detecting part 32 performs filtering on the input image to detect the embedded signal. The symbol is restored from the detected signal to retrieve the embedded confidential information 16.

There will be described operations of the watermark information embedding device 10 and the watermark information detecting device 30 thus configured. First, the operation of the watermark information embedding device 10 will be described in reference to Figs. 1-11.

(Document Image 15)

The document image 15 is data including font information and layout information and created by word-processing software, etc. The document image 15 can be created as an image with the document printed on paper according to page. This document image 15 is a monochrome binary image and a white pixel (pixel with value 1) on the image is a background while a black pixel (pixel with value 0) is an area of letter where ink is applied.

(Confidential Information 16)

The confidential information 16 is various data including letter, voice and image. In the watermarked document image synthesizing part 13, the confidential information 16 is overlapped as the background of the document image 15.

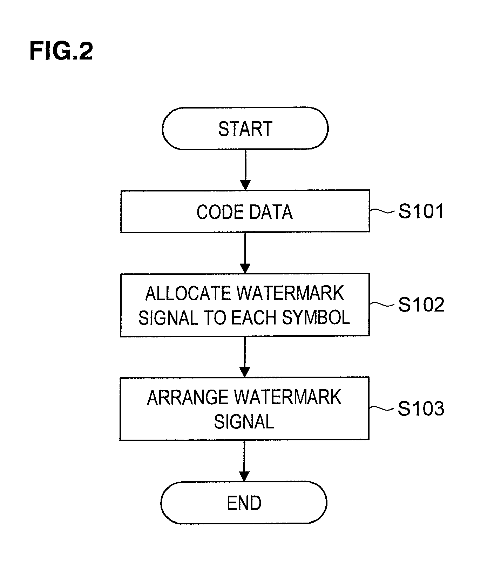

Fig. 2 is a flowchart of a process in the watermarked document image synthesizing part 13.

First, the confidential information 16 is converted into an N-dimensional code (step S101). Although N is arbitrarily determined, N is set at 2 in this embodiment to facilitate the description. Accordingly, the code generated in step S 101 is binary code expressed by a bit string of 0 and 1. In this step S101, data may be coded as it is or the encoded data may be coded.

Next, a watermark signal is allocated to each symbol of the code word (step S 102). The watermark signal expresses a wave with arbitrary direction and wavelength by arrangement of a dot (black pixel). The watermark signal will be described later.

Further, a signal unit corresponding to the bit string of the coded data is arranged on the document image 15 (step S103).

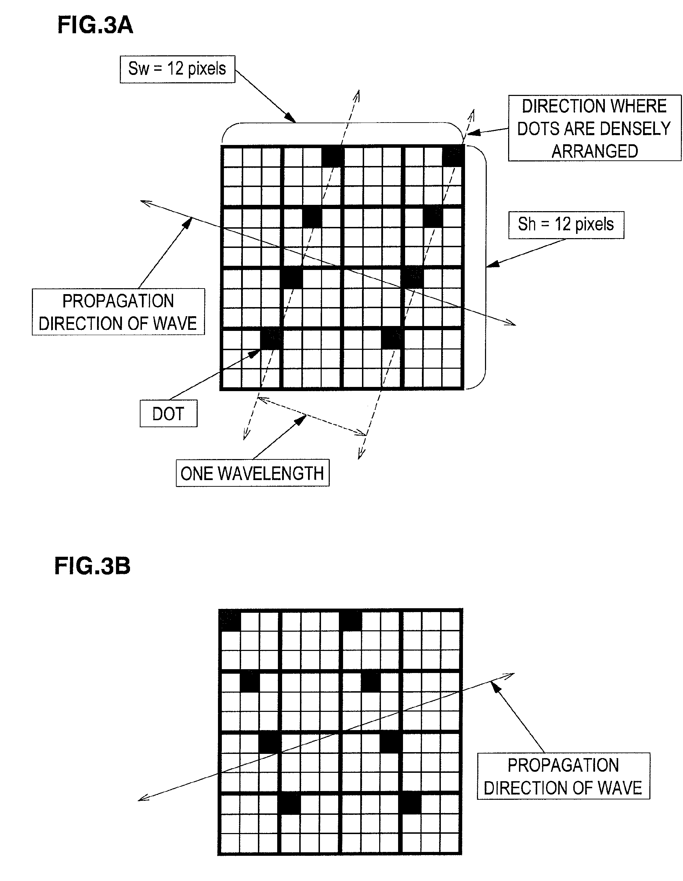

In the above step S102, there will be described a watermark signal allocated to each symbol of the code word. Figs. 3A and 3B is an explanatory diagram of an example of a watermark signal.

The width and height of the watermark signal are indicated as Sw and Sh, respectively. Although Sw and Sh may be different from each other, there is set as Sw = Sh in this embodiment to facilitate the description. The unit of length is pixel number and there is set as Sw = Sh = 12 in the example of Figs. 3A and 3B. The sizes of these signals depend on the resolution of the watermarked image when these signals are printed on paper. For example, when the watermarked image has a resolution of 600 dpi (dot per inch: unit of resolution, dot number per inch), the width and height of the watermark signal in Figs. 3A and 3B make 12/600 = 0.02 (inch) on a printed document.

Hereinafter, a rectangular with the width and height of Sw and Sh will be referred to as "signal unit" as one signal unit. In Fig. 3A, the distance between dots is dense in the direction of arctan (3) (arctan is the inverse function of tan) with regard to a horizontal axis and the propagation direction of wave is arctan (-1/3). Hereinafter, this signal unit will be referred to as unit A. In Fig. 3B, the distance between dots is dense in the direction of arctan (-3) with regard to a horizontal axis and the propagation direction of wave is arctan (1/3). Hereinafter, this signal unit will be referred to as unit B.

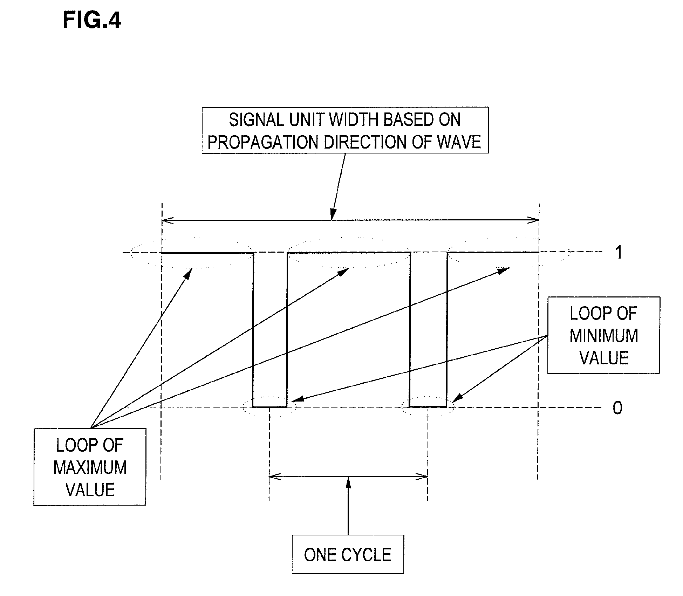

Fig. 4 is a sectional view of a change of a pixel value in Fig. 3A seen from the direction of arctan (1/3). In Fig. 4, the part where the dots are arranged is a loop of minimum value of the wave (the point at the maximum amplitude) while the part where the dots are not arranged is a loop of maximum value of wave.

Since, in one unit, there are two areas where the dots are densely arranged, the frequency per unit is 2 in this example. And since the propagation direction of wave is vertical to the direction where the dots are densely arranged, the wave of unit A becomes arctan (-1/3) with regard to the horizontal direction while the wave of unit B becomes arctan (1/3). It should be noted that when the directions of arctan (a) and arctan (b) are vertical, there is set as $a \times b = -1$.

In this embodiment, a symbol 0 is allocated to the watermark signal expressed by the unit A while a symbol 1 is allocated to the watermark signal expressed by the unit B. These are referred to as symbol unit.

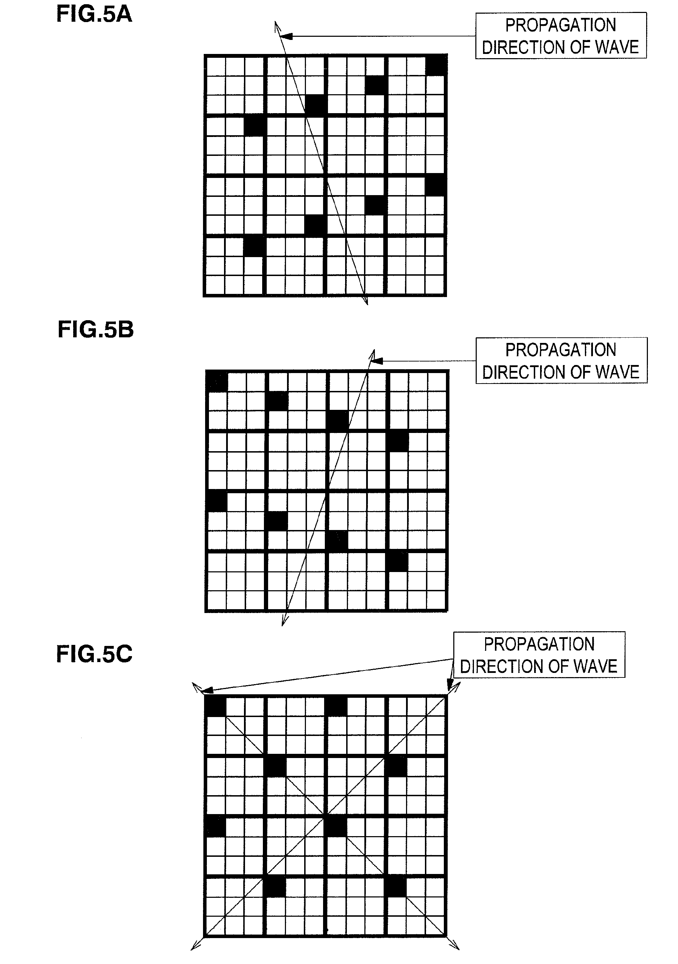

There may be dot arrays as shown in, for example, Figs. 5A-5C as well as those in Figs. 3A and 3B in the watermark signal. In Fig. 5A, the distance between dots is dense in the direction of arctan (1/3) with regard to a horizontal axis and the propagation direction of wave is arctan (-3). Hereinafter, this signal unit will be referred to as unit C.

In Fig. 5B, the distance between dots is dense in the direction of arctan (-1/3) with regard to a horizontal axis and the propagation direction of wave is arctan (3). Hereinafter, this signal unit will be referred to as unit D. In Fig. 5C, the distance between dots is dense in the direction of arctan (-1) with regard to a horizontal axis and the propagation direction of wave is arctan (1). Hereinafter, this signal unit will be referred to as unit E.

Since there are a plurality of patterns of unit combinations to which symbols 0 and 1 are allocated other than the combinations previously allocated, there can also be configured as that the embedded signal cannot be decoded easily by a third party (misbehaving person) by concealing the target symbol that the watermark signal is allocated.

Further, when the confidential information is coded by four-dimensional code in step S 102 in Fig. 2, it is possible to allocate, for example, symbol 0 of code word to the unit A, symbol 1 to the unit B, symbol 2 to the unit C and symbol 3 to the unit D.

In the examples of watermark signal shown in Figs. 3A, 3B and 5A-5C, since all the numbers of dots in one unit are equal, apparent shading becomes uniform by arranging these unit closely. On the printed paper, therefore, it seems that a gray image with single density is embedded as the background.

To achieve such an effect, for example, the unit E is defined as a background unit (signal unit without a symbol allocated) and arranged closely to form the background of the document image 15. When the symbol unit (units A and B) is embedded in the document image 15, the background unit (unit E) at the position in which the symbol unit is to be embedded is replaced by the symbol unit (units A and B).

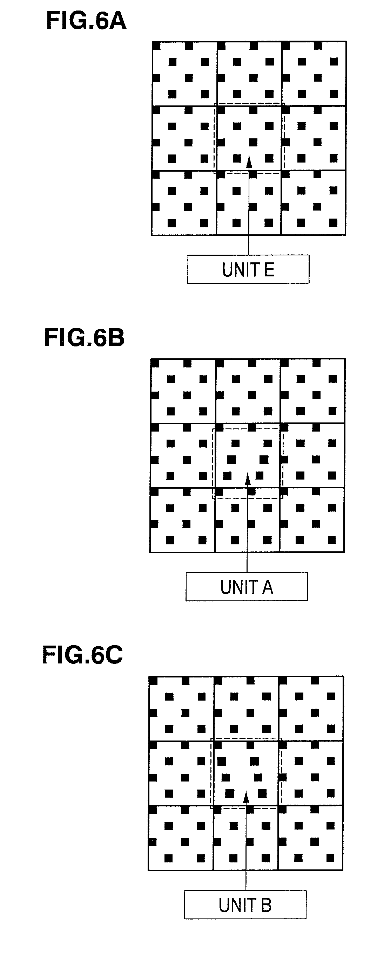

Fig. 6A is an explanatory diagram showing the case where the unit E is defined as a background unit arranged closely to form a background of the document image 15, Fig. 6B shows an example of embedding the unit A in the background image of Fig. 6A and Fig. 6C shows an example of embedding the unit B in the background image of Fig. 6A. In this embodiment, although there will be described a method of setting the background unit as the background of the document image 15, the background of the document image 15 may be configured by arranging only the symbol unit.

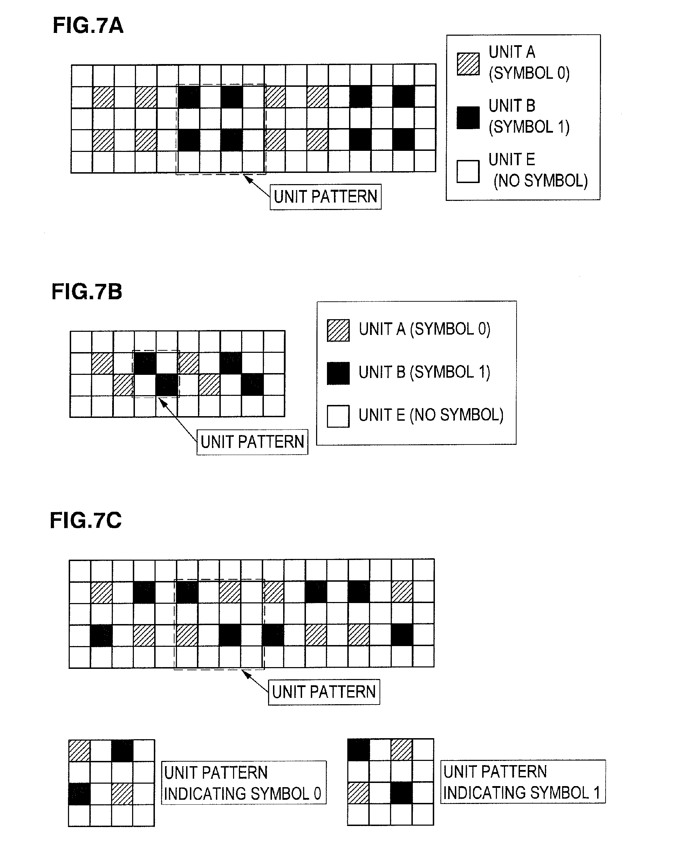

Next, there will be described a method of embedding one symbol of the code word in the document image 15 in reference to Figs. 7A-7C.

Figs. 7A-7C is an explanatory diagram showing an example of a symbol embedding method in the document image 15. Here, there will be described the case of embedding a bit string "0101" as an example.

As shown in Figs. 7A and 7B, the same symbol units are repetitively embedded. The reason for this is to prevent the letter in the document overlapped on the embedded symbol unit from being overlooked at the time of detecting the signal. The recurrence rate and the arrangement pattern (hereafter, referred to as unit pattern) of the symbol unit are arbitrary.

In other words, as an example of unit pattern, it is possible to set the recurrence rate at 4 (there are four symbol units in one unit pattern) as shown in Fig. 7A or to set at 2 (there are two symbol units in one unit pattern) as shown in Fig. 7B. Or, the recurrence rate may be set at 1 (there is only one symbol unit in one unit pattern).

Although one symbol is allocated to one symbol unit in Figs. 7A and 7B, the symbol may be allocated to the arrangement pattern of the symbol unit as shown in Fig. 7C.

It depends on the size of signal unit, the size of unit pattern and the size of document image how many bits can be embedded in one page as the amount of information. The number of signals embedded in the horizontal direction and vertical direction of the document image may be calculated by signal detection as a known manner or by calculating back based on the size of the image input from the input device and the size of the signal unit.

When it is assumed that the unit patterns with the numbers of Pw in the horizontal direction and Ph in the vertical direction can be embedded, the unit pattern at an arbitrary position in the image is expressed as U(x, y), x = 1 ~Pw, y = 1~Ph and U(x, y) is referred to as "unit pattern matrix". In addition, the number of bits that can be embedded in one page is referred to as "embedded bit number". The embedded bit number is expressed as Pw × Ph.

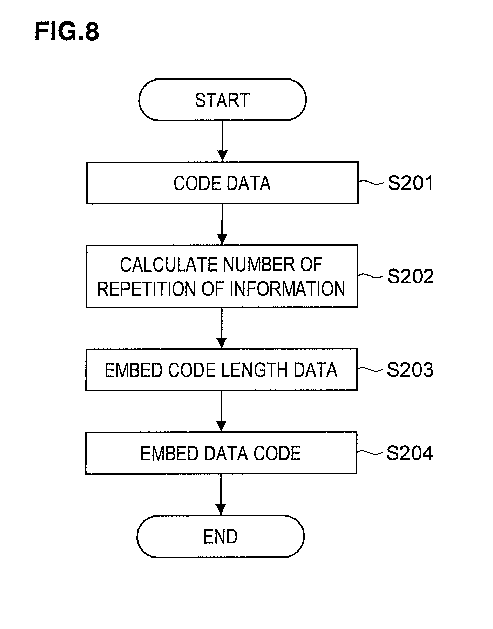

Fig. 8 is a flowchart of a method of embedding confidential information 16 in the document image 15. Here, there will be described the case of embedding the same information repetitively in a sheet (one page) of the document image 15. Embedding the same information repetitively makes it possible to retrieve the embedded information even in the case where the embedded information disappears because the whole of one unit pattern is daubed by overlapping the document image 15 with the confidential information 16.

First, the confidential information 16 is converted into an N-dimensional code (step S201), which is the same as step S101 in Fig. 2. Hereinafter, the coded data is referred to as data code while what expresses the data code by the combination of the unit pattern is referred to as data code unit Du.

Next, it is calculated how many times the data code unit can be embedded in a sheet of image based on the code length (here, bit number) of the data code and the embedded bit number (step S202). In this embodiment, it is assumed that the code length data of the data code is inserted to the first line of the unit pattern matrix. There may be configured as that the code length of the data code is set at a fixed length so as not to embed the code length data.

The number Dn of embedding the data code unit is calculated by the following expression where the data code length is set as Cn.

[Expression 1]

$$Dn = \left\lfloor \frac{Pw \times (Ph - 1)}{Cn} \right\rfloor$$

[A] is a maximum integer that does not exceeding A.

Here, when a residue is set as Rn (Rn = Cn - (Pw × (Ph - 1))), the data code unit at the number of Dn times and the unit pattern corresponding to the first Rn bits of the data code are to be embedded in the unit pattern matrix. However, Rn bits of the residue do not have to be necessarily embedded.

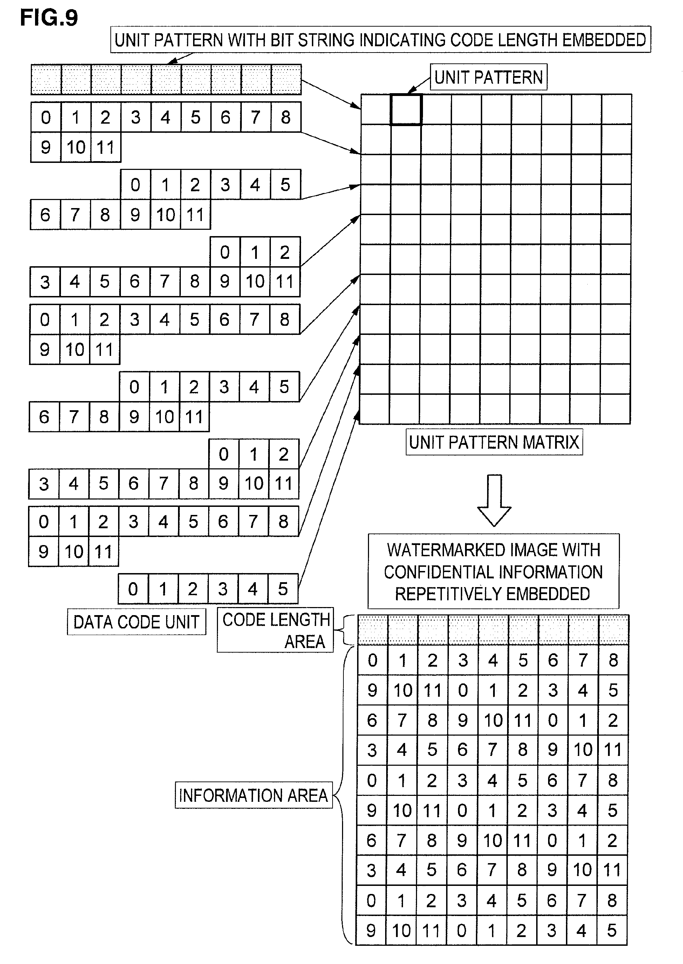

In the description of Fig. 9, the size of the unit pattern matrix is set at 9 × 11 (11 rows and 9 sequences), the data code length is set at 12 (those having numerals 0-11 in this Figure indicate each code word of data code).

Next, the code length data is embedded in the first row of the unit pattern matrix (step S203). Although there is described an example of embedding only once the code length data expressed by 9-bit data in the example of Fig. 9, when the width Pw of the unit pattern matrix is large enough the code length data can be embedded repetitively similarly to the data code.

Further, after the second row of the unit pattern matrix, the data code unit is repetitively embedded (step S204). As shown in Fig. 9, there is embedded in the row direction sequentially from the data code of MSB (most significant bit) or LSB (least significant bit). In the example of Fig. 9, the data code unit is embedded seven times and the first 6 bits of data code is embedded.

The data may be embedded to be sequential in the row direction as shown in Fig. 9 or in the sequence direction.

There has been described as above about overlapping the document image 15 and the confidential information 16 in the watermarked document image synthesizing part 13.

As described above, the watermarked document image synthesizing part 13 overlaps the document image 15 with the confidential information 16. Each value of the watermarked document image is calculated by AND operation (AND) of the pixel values to which the document image 15 and the confidential information 16 correspond. In other words, when either the document image 15 or the confidential information 16 is 0 (black), the pixel value of the watermarked document image is 0 (black) and the value becomes 1 (white) in other cases.

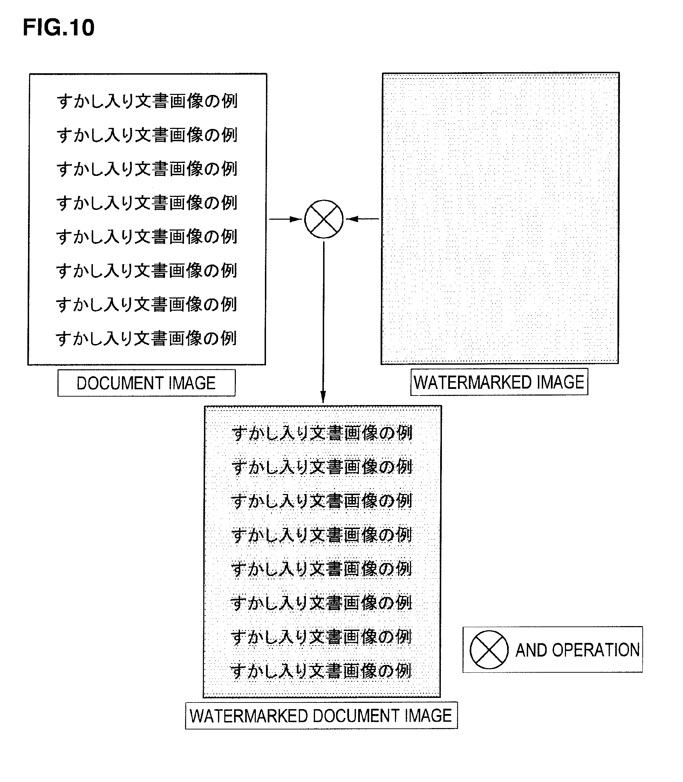

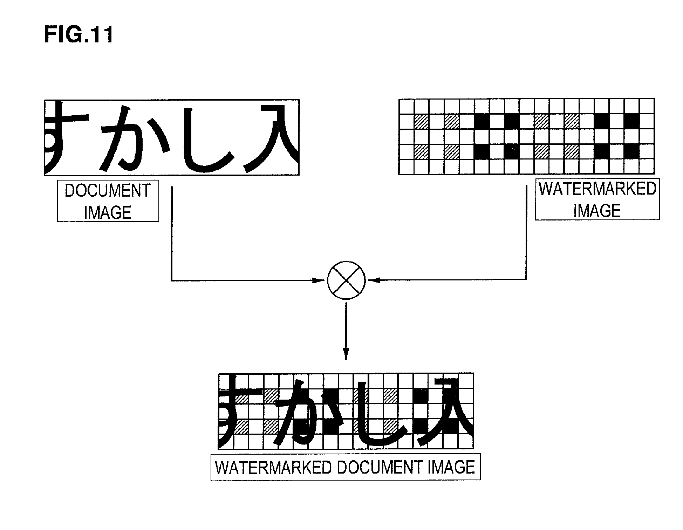

Fig. 10 is an explanatory diagram of the watermarked document image. Fig. 11 is an explanatory diagram with a part of Fig. 10 partially enlarged. Here, the pattern in Fig. 7A is used as the unit pattern. The watermarked document image is output by the output device 14.

There has been described the operation of the watermark information embedding device 10 as above.

Next, the operation of the watermark information detecting device 30 will be described in reference to Fig. 1 and Figs. 12-19.

(Watermark Detecting Part 32)

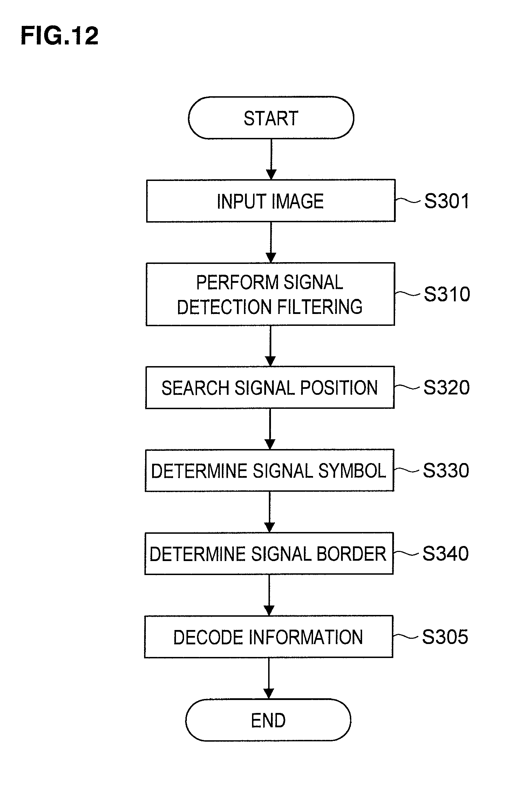

Fig. 12 is a flowchart of a process of the watermark detecting part 32.

First, the watermarked document image is input to a memory of computer, etc. by the input device such as scanner (step S301). This image is referred to as an input image. The input image is an image with multiple tone and will be described as a gray image with 256-tone. Although the resolution of the input image (resolution in being scanned by the input device 31) may be different from the watermarked document image created in the watermark information embedding device 10, there will be described assuming that the resolution is the same as that of the image created in the above watermark information embedding device 10. In addition, there will be described the case of one unit pattern being configured by one symbol unit.

<Signal Detection Filtering Step (step S310)>

In step S310, a filtering process is performed on the whole of the input image to calculate and compare the filter output value. The filter output value is calculated by using a filter called Gabor filter as follows and based on the convolution between the filter and the image.

Hereafter, Gabor filter G (x, y), x = 0 ~ gw - 1 and y = 0 ~ gh - 1 will be shown, in which gw and gh indicate the size of the filter which is the same as the signal unit embedded in the watermark information embedding device 10.

[Expression 2]

$$G(x,y) = \exp\left[-\pi\left\{\frac{(x-x0)^2}{A^2} + \frac{(y-y0)^2}{B^2}\right\}\right] \times \exp\left[-2\pi i\{u(x-x0) + v(y-y0)\}\right]$$

i: imaginary unit

$$x = 0 \sim gw - 1,\ y = 0 \sim gh - 1,\ x0 = gw/2,\ y0 = gh/2$$

A: extent of impact in horizontal direction, B: extent of impact in vertical direction

$$\tan^{-1}(u/v)\text{: direction of wave,}\ \sqrt{u^2 + v^2}\text{ : frequency}$$

The filter output value at an arbitrary position in the input image is calculated by using the convolution between the filter and the image. In the case of Gabor filter, since there are a real number filter and an imaginary number filter (a filter out of phase with the real number filter by half wavelength), the square mean value of them are set at the filter output value. For example, when the convolution between a luminance value of a certain pixel (x, y) and the real number filter of the filter A is Rc and the convolution with the imaginary number filter is Ic, a filter output value F (A, x, y) is calculated by the following expression.

[Expression 3]

$$F(A,x,y) = \sqrt{Rc^2 + Ic^2}$$

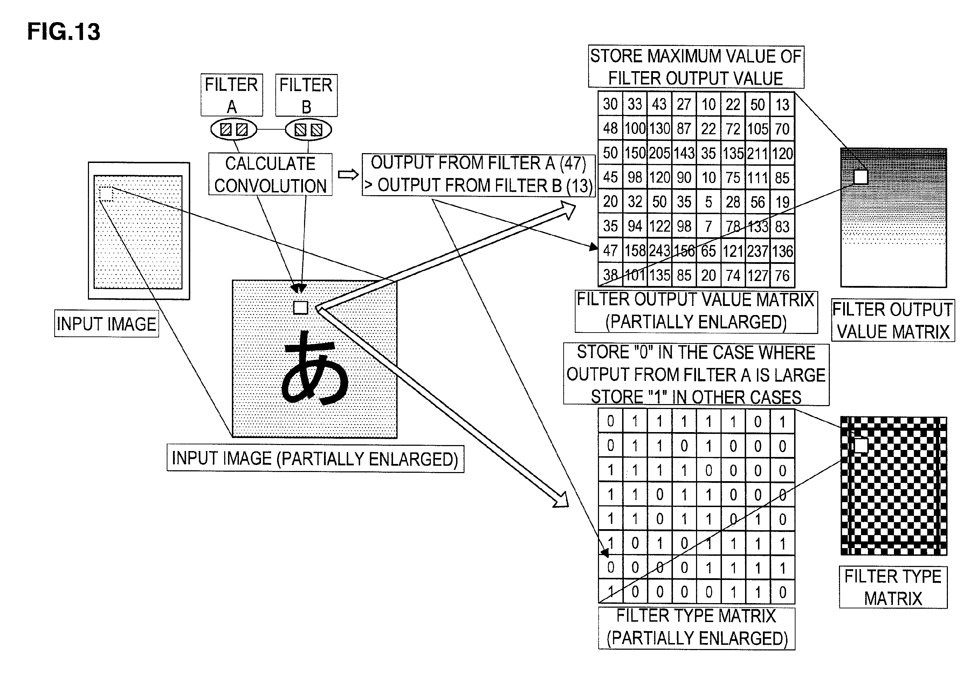

After calculating the filter output values for all filters corresponding to each signal unit as described above, the filter output values thus calculated are compared in each pixel to store a maximum value F (x, y) as a filter output value matrix. In addition, the number of the signal unit corresponding to the filter with maximum value is stored as a filter type matrix (Fig. 13). More specifically, in the case of F(A, x, y) > F(B, x, y) in a certain pixel (x, y), F(A, x, y) is set as the value of (x, y) in the filter output value matrix and "0" indicating the signal unit A is set as the value of (x, y) in the filter type matrix (in this embodiment, the numbers of the signal units A and B are set at "0" and "1", respectively).

Although the number of filters is two in this embodiment, it is only necessary to store the signal unit number corresponding to the maximum value of a plurality of filter output values and the signal unit corresponding to the filter at the time.

<Signal Position Searching Step (step S320)>

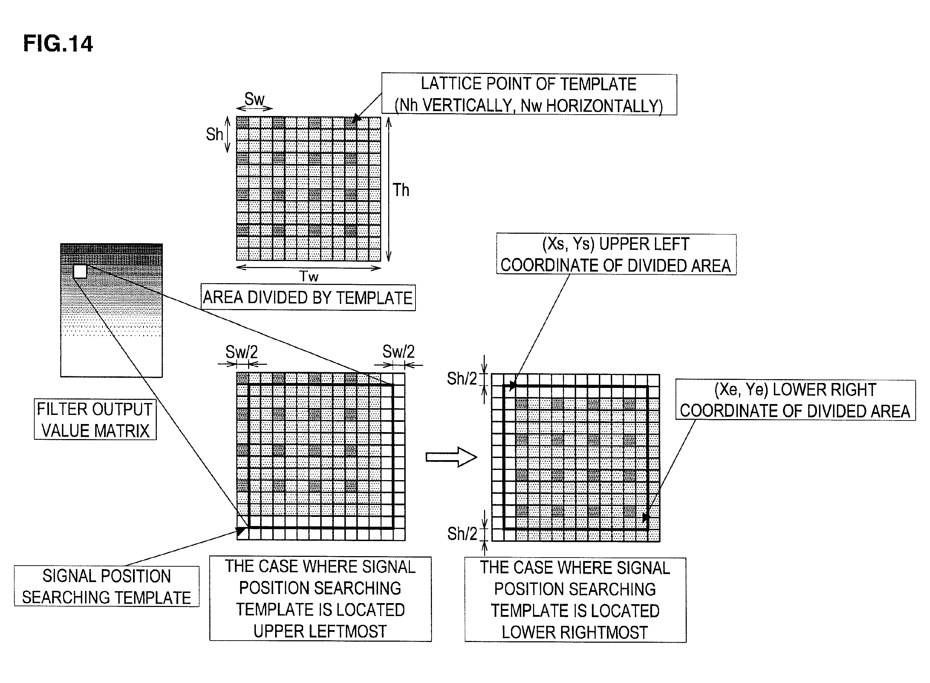

In step S320, the position of the signal unit is determined by using the filter output value matrix obtained in step S310. More specifically, when it is assumed that the size of the signal unit is defined as Sh x Sw, there is created a signal position searching template in which the interval of lattice points in the vertical direction is Sh, the one in the horizontal direction is Sw and the number of the lattice points is defined as $Nh \times Nw$ (Fig. 14). The size of the template thus created is indicated as Th(Sh * Nh) $\times$ Tw(Sw * Nw). As Nh and Nw, it is only necessary to use the value suitable for searching the signal unit position.

Next, the filter output value matrix is divided according to the size of template. In each divided area, the template is moved in a unit of pixel on the filter output value matrix within a range that does not overlap with the signal unit of the adjacent area ($\pm$ Sw/2 in a horizontal direction, $\pm$ Sh/2 in a vertical direction) to calculate a summation V of a filter output value matrix value F on the lattice point of the template by using the following expression (Fig. 14), and the lattice point of the template with the maximum summation is determined as the position of the signal unit of the area.

[Expression 4]

$$V(x, y) = \sum_{u=0}^{Nw-1} \sum_{v=0}^{Nh-1} F(x + Sw * u, y + Sh * v)$$

$$Xs - Sw/2 < x < Xe + Sw/2, Ys - Sh/2+ < y < Ye + Sh/2$$

(Xs, Ys): upper left coordinate of the divided area, (Xe, Ye): lower right coordinate of the divided area

The above example is the case of calculating the filter output value for all pixels in step S310, in which the filtering can be performed only for the pixels with a certain interval in performing filtering. For example, when the filtering is performed every two pixels, it is only necessary to set the interval of the lattice point of the above signal position searching template at 1/2.

<Signal Symbol Determining Step (step S330)>

In step S330, it is determined that the signal unit is A or B by referring to the value signal (unit number corresponding to the filter) of the filter type matrix of the signal unit position determined in step S320.

As above, the judgment result of the determined signal unit is stored as a symbol matrix.

<Signal Border Determining Step (step S340)>

Since, in step S320, the filtering process is performed for the whole surface of the image whether or not the signal unit is embedded, it is necessary to determine where the signal unit is embedded. In step S340, therefore, a signal border is determined by searching the pattern determined in embedding the signal unit in advance based on the symbol matrix.

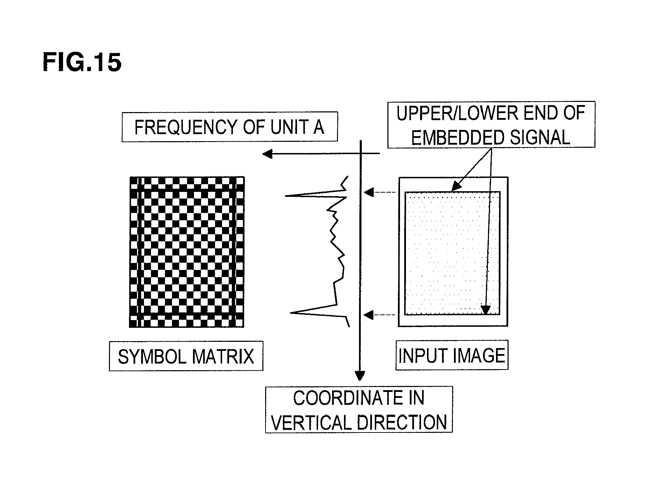

When it is determined that the signal unit A is certainly embedded at the border where the signal unit is embedded, the number of the signal units A is counted in the horizontal direction of the symbol matrix determined in step S330 to determine the position where the number of signal units A is most from the center to the upper and lower parts as the upper/ lower end of the signal border. In the example of Fig. 15, since the signal unit A in the symbol matrix is expressed by "black" (value "0"), the number of the signal units A can be counted by counting the number of black pixels in the symbol matrix and the upper/lower end of the signal border can be determined by the frequency distribution thereof. The leftmost/rightmost, which is only different in the direction of the counting of the number of the units A, can be similarly determined.

The method of determining the signal border is not restricted to the above example, and it is only necessary to determine in advance the pattern capable of searching based on the symbol matrix on the sides of embedding and detecting.

Getting back to the flowchart of Fig. 12, the following step S305 will be described. In step S305, the original information is restored from the part corresponding to the internal part of the signal border in the symbol matrix. In this embodiment, since one unit pattern is configured by one symbol unit, the unit pattern matrix becomes equivalent to the symbol matrix.

<Information Restoration Step (step S305)>

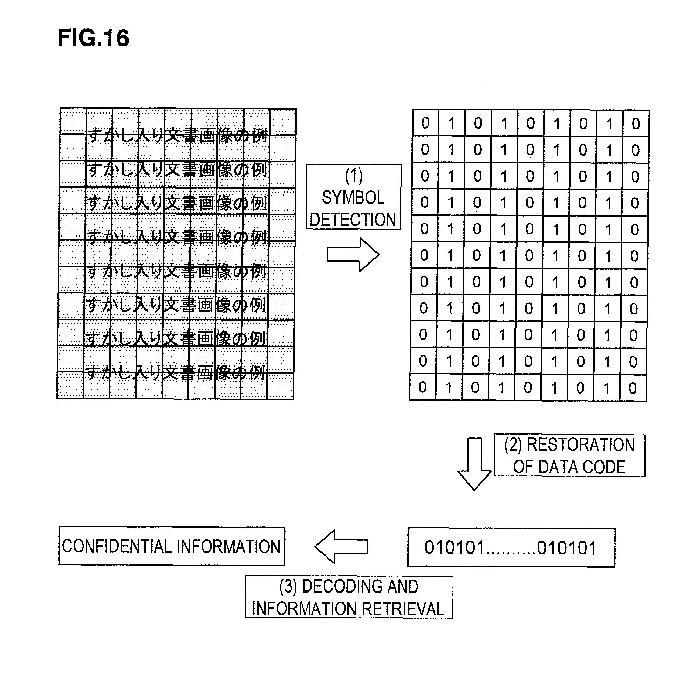

Fig. 16 is an explanatory diagram of information restoration. The step of information restoration is as follows.

(1) The symbols embedded in each unit pattern are detected (Fig. 16(1)).
(2) The data code is decoded by connecting the symbols (Fig. 16(2)).
(3) The embedded information is retrieved by decoding the data code (Fig. 16(3)).

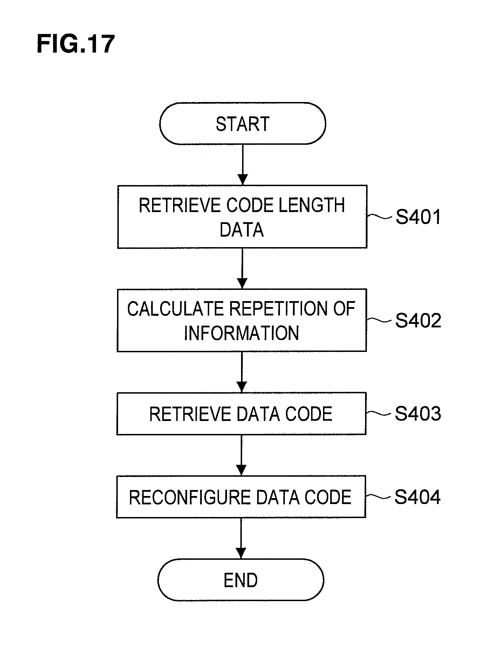

Figs. 17-19 are explanatory diagrams of an example of a method of restoring the data code. The method of restoring is carried out inversely with the process in Fig. 8.

First, the code length data part is retrieved from the first line of the unit pattern matrix to obtain the code length of the embedded data code (step S401).

Next, the number Dn of embedding the data code unit and the residue Rn are calculated based on the size of the unit pattern matrix and the code length of the data code obtained in step S401 (step S402).

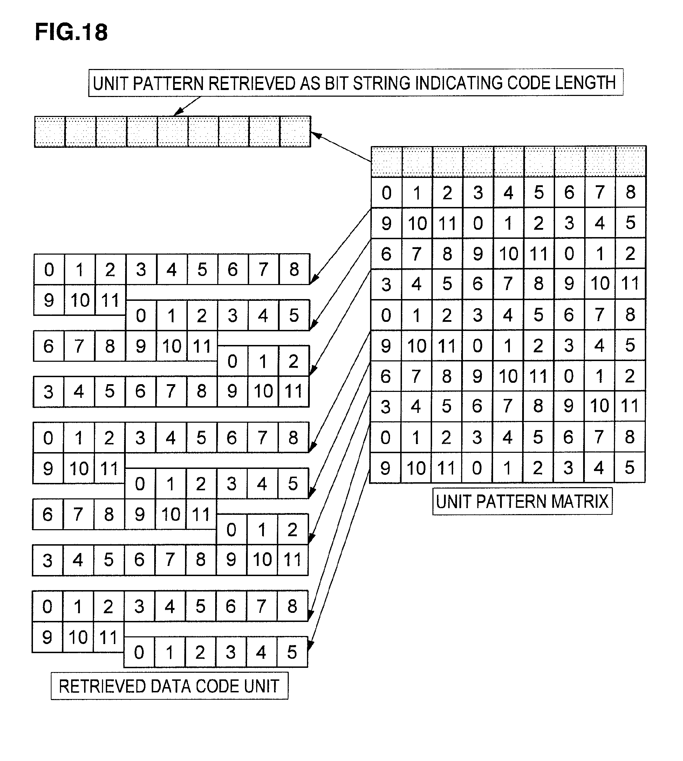

Next, the data code unit is retrieved with the inverse method with step S203 from the second line and the following line of the unit pattern matrix (step S403). In the example of Fig. 18, there is resolved every 12 pattern units from U(1, 2) (2 rows and 1 sequence) (U(1, 2) ~ U(3,3), U(4,3) ~ U(6, 4), ···). Since there are determined as Dn = 7, Rn = 6, the 12 pattern units (data code unit) are retrieved seven times and six (corresponding to the upper six of the data code unit) unit patterns (U(4, 11) ~ U(9, 11)) are retrieved as residue.

The embedded data code is reconfigured by performing a bit certainty operation for the data code unit retrieved in step S403 (step S404). Hereinafter, the bit certainty operation will be described.

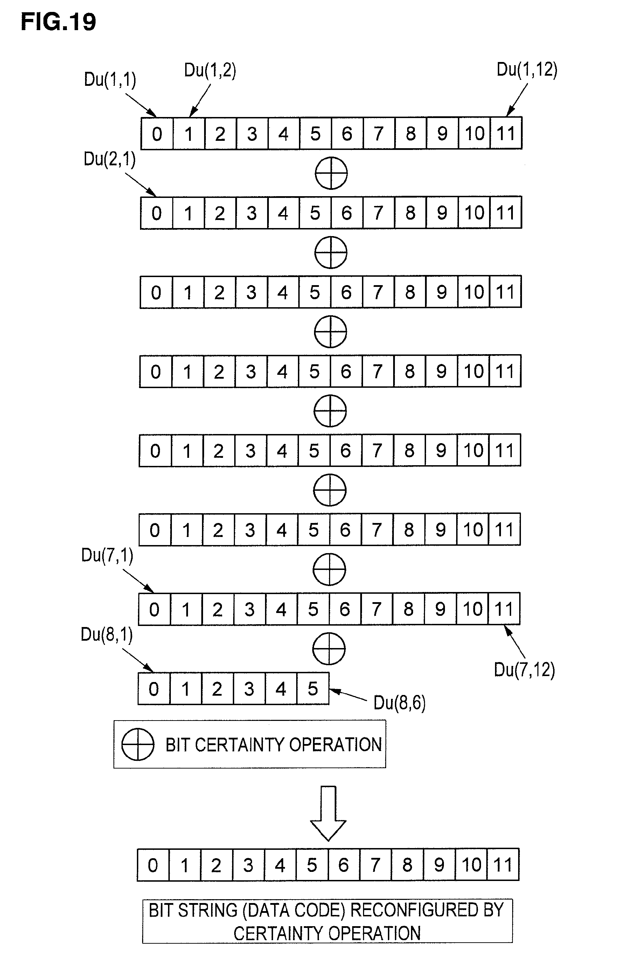

The data code retrieved first from the second line and the first sequence of the unit pattern matrix is referred to as Du (1, 1) ~Du (12, 1) as shown in Fig. 19 and there will be indicated sequentially as Du(1, 2) ~Du(12, 2), ···. In addition, the residue part is indicated as Du(1, 8) ~Du(6, 8). The bit certainty operation means determining the value of each symbol of the data code by, for example, deciding by majority for each element of the data code unit. Thereby even when the signal cannot be correctly detected from an arbitrary unit in an arbitrary data code unit (bit inversion error) due to overlapping with letter area or dirt on paper, the data code can be correctly restored finally.

More specifically, in the first bit of the data code, it is judged to be "1" when there are more cases where the signal detection result of Du (1, 1), Du(1, 2), ··· Du(1, 8) is "1" while it is judged to be "0" when there are more cases of "0". Similarly in the second bit of the data code, it is judged by decision by majority of the signal detection result of Du (2, 1), Du(2, 2), ··· Du(2, 8). In the 12th bit of the data code, it is judged by decision by majority of the signal detection result of Du (12, 1), Du(12, 2), ··· Du(12, 7) (Du(12, 8) does not exist).

Although there has been described the case of embedding the data code repetitively, there can also be realized the method where the repetition of the data code unit is not carried out by using an error-correcting code in coding the data.

(Advantage of the First Embodiment)

According to this embodiment as described above, the position of the signal unit can be determined by filtering on the whole surface of the input image and by using the signal position searching template so that the summation of the filter output value can be maximum. Accordingly, even when the image is stretched due to the distortion of paper, etc., the position of the signal unit can be correctly detected to detect the confidential information correctly from the document including the confidential information.

(Second Embodiment)

In the first embodiment described above, only the detection of confidential information from the printed document is performed. In the second embodiment, on the contrary, a falsification judging part is added to the first embodiment to compare feature quantities of the document image (image data before embedding a watermark) in each signal unit position and the input image therein (image, with the printed image having a watermark embedded, scanned by a scanner, etc.) by using the signal unit position determined in the signal position searching step (step S320) and to judge the falsification of the contents of the printed image.

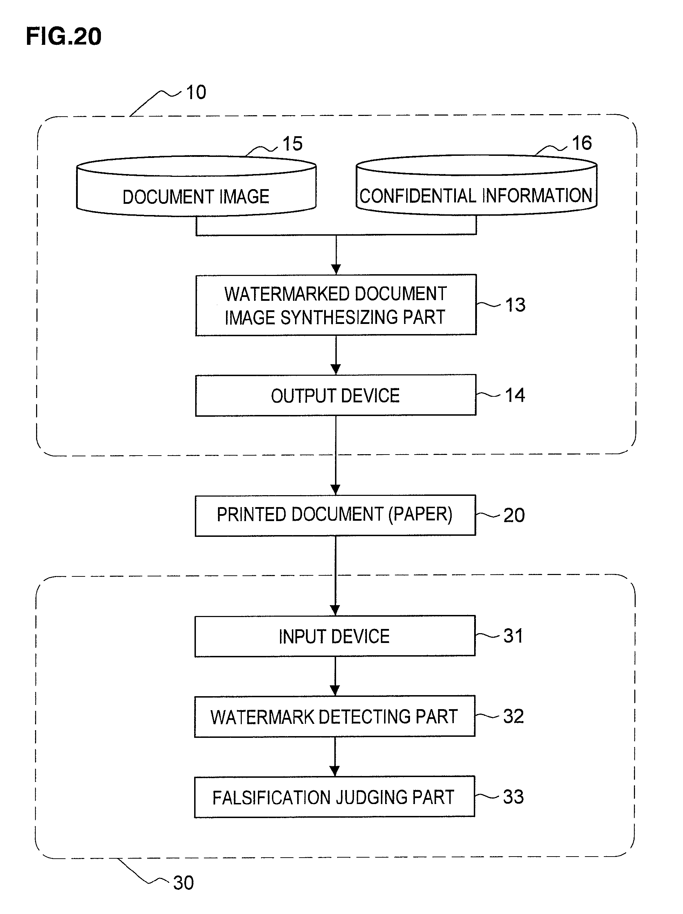

Fig. 20 is a processing configuration diagram in the second embodiment. A falsification judging part 33 is added to that in the first embodiment. In the falsification judging part 33, the falsification of the contents of the printed image is judged by comparing the feature quantities of the document image and the input image that are embedded in advance.

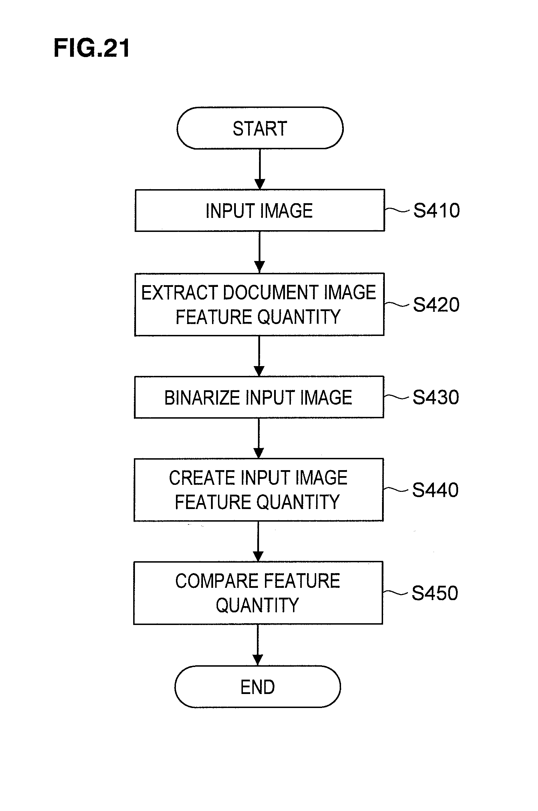

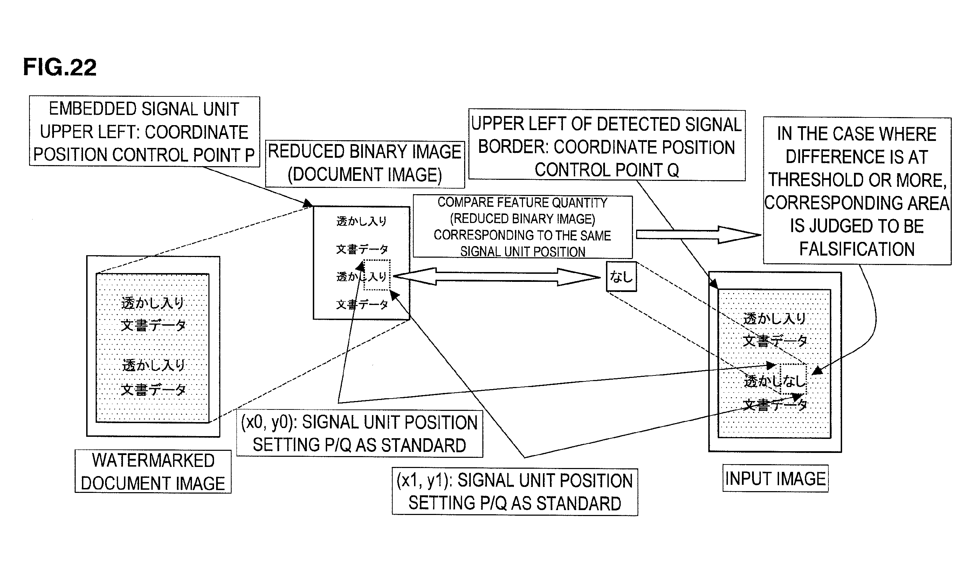

Fig. 21 shows a flow of process of the falsification judging part 33. Fig. 22 is an explanatory diagram of the process in the falsification judging part 33.

In step S410, the watermarked document image scanned by the input device 31 such as scanner similarly in the first embodiment is input to a memory such as computer (this image will be referred to as an input image).

<Document Image Feature Quantity Extracting Step (step S420)>

In step S420, the feature quantity of the document image embedded in advance is extracted from the data decoded in the information decoding step (step S305) of the watermark detecting part 32. As the document image feature quantity in this embodiment, in the watermarked document image, there is used a reduced binary image where the upper left coordinate of the area where the signal unit is embedded is set as a control point (control point P in Fig. 22) as shown in Fig. 22. Since the document image of the embedding side is a binary image, it is only necessary to perform a reducing process using a well-known technology. The image data may be embedded by using the signal unit allocated to each symbol after compressing the amount of data by using the method of compressing the binary image such as MR and MMR.

< Input Image Binarization Step (step S430) >

In step S430, the input image is binarized. In this embodiment, the information on the binarization threshold embedded in advance is extracted from the data decoded in the information decoding step (step S305) of the watermark detecting part 32. The binarization threshold is determined from the extracted information to binarize the input image. It is only necessary to embed the information on the binarization threshold by coding by an arbitrary method such as using an error-correcting code and by using the signal unit allocated to each symbol as in the case of the signal unit in the first embodiment.

As the information on the binarization threshold, there can be exemplified the number of black pixels included in the document image in embedding. In such a case, it is only necessary to set the binarization threshold so that the number of black pixels of the binary image obtained by binarizing the input image normalized to be the same size as the document image can match the number of black pixels included in the document image in embedding.

Further, when the document image is divided into several areas to embed the information on the binarization threshold for the areas, the binarization can be performed in a unit of the area of the input image. With this, even when there is a great falsification in a certain area of the input image and the number of black pixels in this area is greatly different from the number of the black pixels of the original document image to be out of a correct binarization threshold, the correct binarization threshold can be set by referring to the information on the binarization threshold in the peripheral area.

With regard to the image binarization, the input image may be binarized by determining the binarization threshold with a well-known technology. However, by adopting the above method, almost the same data as the binary image of the document image in embedding can be created also on the watermark detection's side.

<Input Image Feature Quantity Extracting Step (step S440)>

In step S440, the feature quantity of the input image is created from the input image, the signal unit position obtained in the signal position searching step (step S320) of the watermark detecting part 32 and the signal border obtained in the signal border determining step (step S340). More specifically, the upper left coordinate of the signal border is set as a control point (control point Q in Fig. 22) to divide a plurality of signal units as one unit, by which the reduced image of the input image to which the coordinate position corresponds is obtained. In Fig. 22, as a certain area divided as above, there is shown as an example a rectangle with the upper left coordinate (xs, ys) and the lower right coordinate (xe, ye). The reducing method may be the same method as on the embedding side.

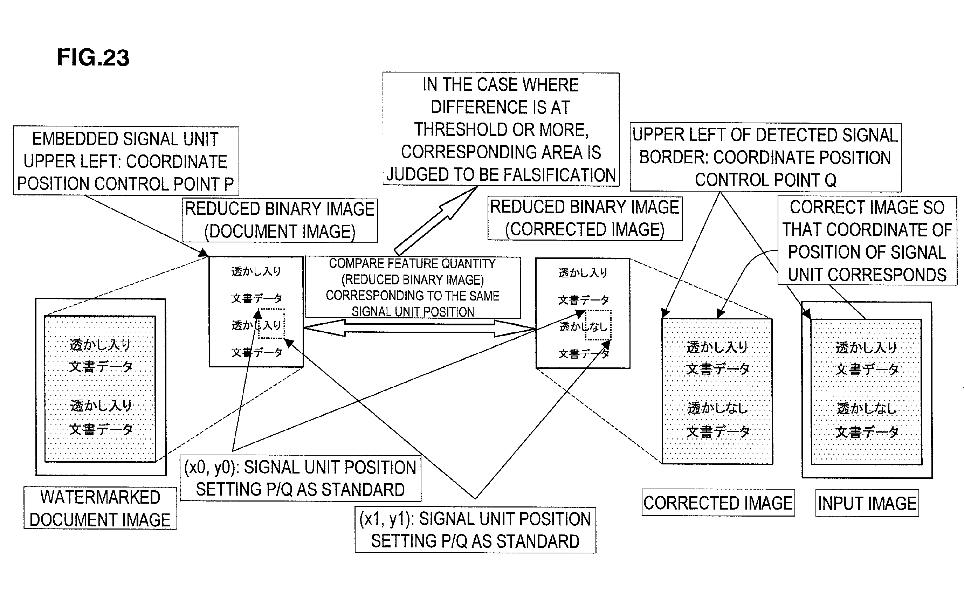

In obtaining the reduced image, after setting the upper left coordinate of the signal border as the control point (control point Q in Fig. 23), dividing a plurality of signal units as one unit and creating the corrected image of the input image to which the coordinate position corresponds by the unit, the corrected image may be reduced.

<Feature Quantity Comparing Step (step S450)>

In step S450, there are compared the feature quantities obtained in the document image feature quantity extracting step (step S420) and the input image feature quantity extracting step (step S440). In the case of not matching, it is judged the printed document corresponding to the position is falsified. More specifically, by comparing the reduced binary image (rectangular with (xs, ye)-(xs, ye) as upper left/lower right points setting the control point Q in Fig. 22) in the unit of the signal unit obtained in step S440 and the reduced binary image (rectangular with (xs, ys)-(xe, ye) as upper left/ lower right points setting the control point P in Fig. 22) of the document image extracted in the document image feature quantity extracting step (step S420 corrsponding thereto), the falsification is judged. For example, in two images to be compared with each other, when the number of pixels with different luminance values is a predetermined threshold or more, it may be judged that the printed document corresponding to the signal unit is falsified.

In the above embodiment, although the reduced binary image is used as a feature quantity, text data described as coordinate information in the printed document may be used. In this case, the falsification can be judged by referring to the data of the input image corresponding to the coordinate information, using well-known OCR technology for the image information to perform character recognition and to compare the recognition result and the text data.

(Advantage of the Second Embodiment)

According to this embodiment as described above, by comparing the feature quantities of the document image embedded in advance and the input image having the printed document, with the confidential information embedded, scanned by a scanner, by setting the signal unit determined by using the signal position searching template, the falsification of the contents of the printed document can be detected. Since the signal unit position can be correctly determined by the first embodiment, using the position makes it possible to compare the feature quantities easily to judge the falsification of the printed document.

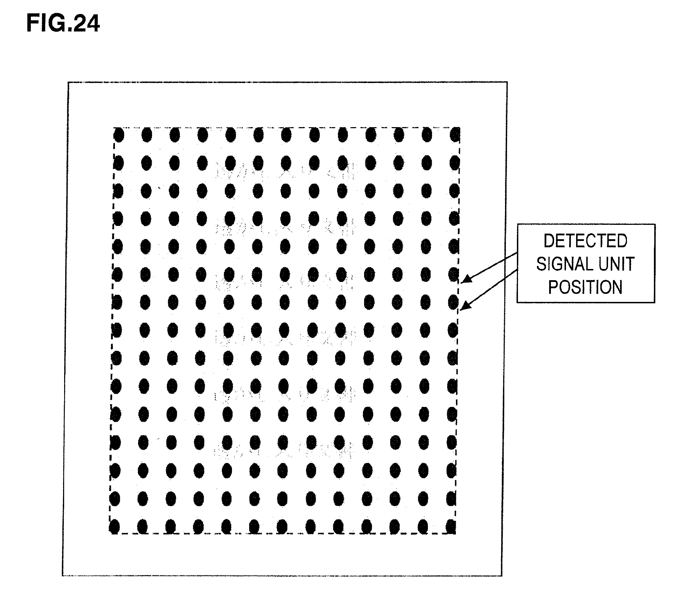

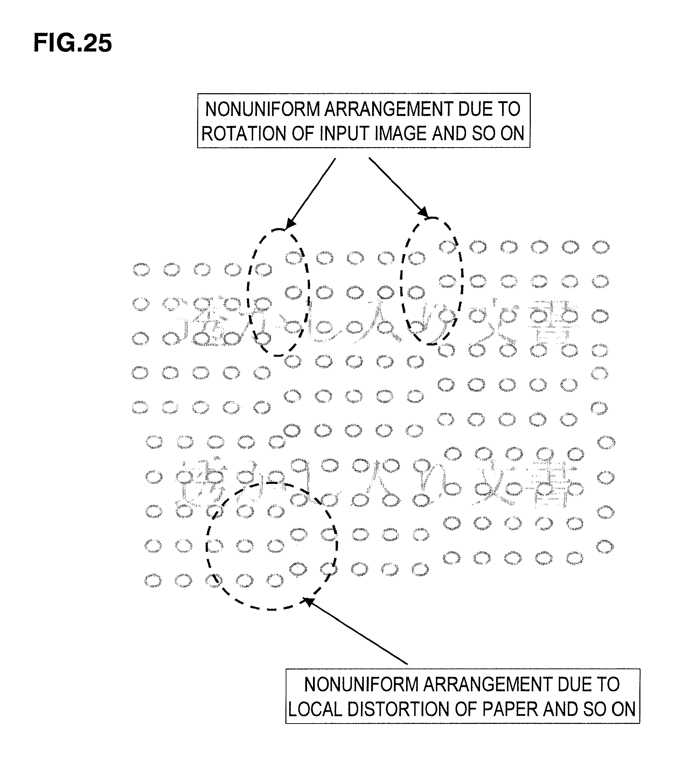

In the first and second embodiments, the falsification of the printing contents printed on paper is automatically detected and the position information on the signal unit is used for specifying the position of falsification. Fig. 24 is the signal unit position detected in the first and second embodiments. Thereby the position of the signal unit is detected in the state of lattice-like arrangement almost uniformly in the whole of the input image (watermarked document image). As shown in Fig. 25, however, there is a part where the detected signal unit position is locally nonuniformly arranged due to rotation of input image or local distortion of paper.

This is for the following reason. In detecting the signal unit position in the first and second embodiment, the result of filtering every several pixels of the input image is stored in the filter output value matrix smaller than the input image so as to reduce the processing time and the signal unit position in this filter output value matrix is determined. When the filtering is performed every two pixels vertically and horizontally, for example, the filter output value matrix becomes half the input image vertically and horizontally. Then with only the severalfold signal unit position (twice in the case of performing filtering every two pixels), the signal unit position on the filter output value matrix and the position on the input image are correlated. For this reason, the small unevenness on the filter output value matrix appears as a large unevenness on the input image. With the large unevenness, the falsification cannot be correctly detected due to the deviation of the position information in comparing the feature quantities of the image.

Therefore, there will be described an embodiment having the first and second embodiment improved to detect the falsification with higher accuracy.

(Third Embodiment)

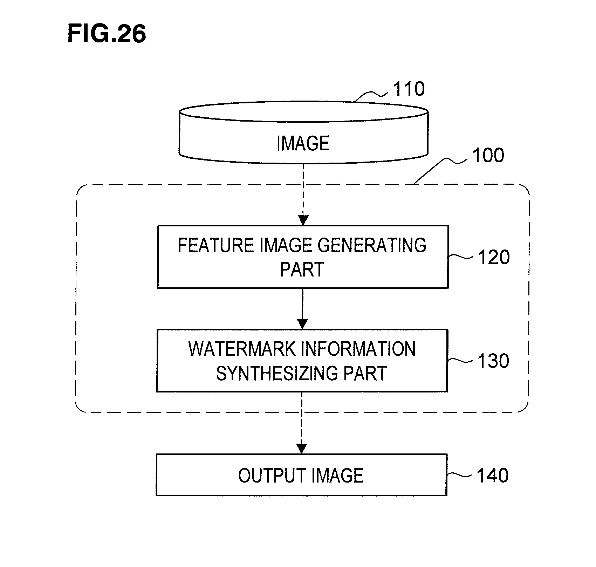

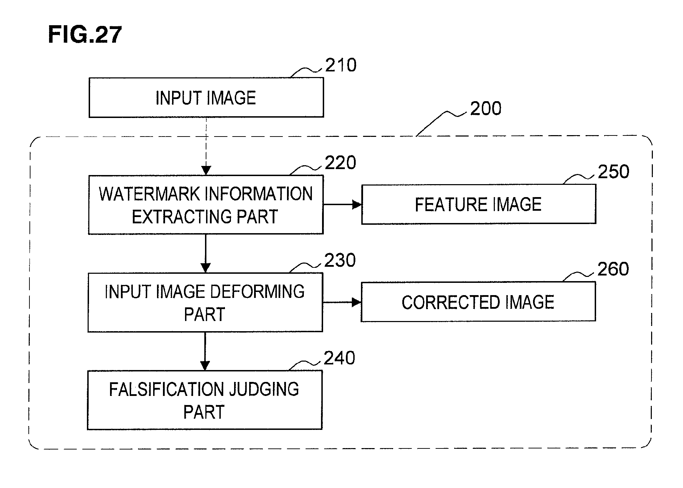

In this embodiment, there is configured by a watermarked image outputting part 100 shown in Fig. 26 and a watermarked image inputting part 200 shown in Fig. 27. Hereinafter, there will be described sequentially.

(Watermarked Image Outputting Part 100)

Fig. 26 is a block diagram of the watermarked image outputting part 100.

The watermarked image outputting part 100 is an operation part for processing by setting an image 110 as the input and configured by a feature image generating part 120 and a watermark information synthesizing part 130, as shown in Fig. 26. The watermarked image outputting part 100 outputs an output image 140 watermarked.

The image 110 is created by imaging the document data created by word-processing software and so on. The feature image generating part 120 is an operation part for generating the image feature data to be embedded as watermark. The image feature data can be generated similarly to the watermarked document image synthesizing part 13 in the first and second embodiments. The watermark information synthesizing part 130 is an operation part for embedding the image feature data as the watermark information in the image 110. The watermark information can be embedded similarly to, for example, the watermarked document image synthesizing part 13 in the first and second embodiments. The output image 140 is a watermarked image.

(Watermarked Image Inputting Part 200)

Fig. 27 is a block diagram of the watermarked image inputting part 200.

The watermarked image inputting part 200 is an operation part for extracting the watermark information by setting an input image 210 as the input and correcting the input image and configured by a watermark information extracting part 220, an input image deforming part 230 and a falsification judging part 240, as shown in Fig. 27.

The input image 210 is created by imaging the output image 140 or paper with the output image 140 printed by an input device such as scanner. The watermark information extracting part 220 is an operation part for extracting the watermark information from the input image to restore a feature image 250. The watermark information can be extracted similarly to, for example, the watermark detecting part 32 in the first and second embodiments. The input image deforming part 230 is an operation part for correcting the distortion of the input image to generate a corrected image 260. The falsification judging part 240 is an operation part for overlapping the feature image 250 and the corrected image 260 to detect a difference area as a falsification.

In this embodiment, there is configured as above.

Next, the operation of this embodiment will be described.

Hereinafter, the part different from the second embodiment will be mainly described. It should be noted that the output image 140 output from the watermarked image outputting part 100 is once printed and imaged by a scanner to be sent to the watermarked image inputting part 200.

(Watermarked Image Outputting Part 100)

In the watermarked image outputting part 100, the part different from the above second embodiment is the feature image generating part 120. This is a function addition to <Document Image Feature Quantity Extracting Step (step S420) > in the second embodiment.

(Feature Image Generating Part 120)

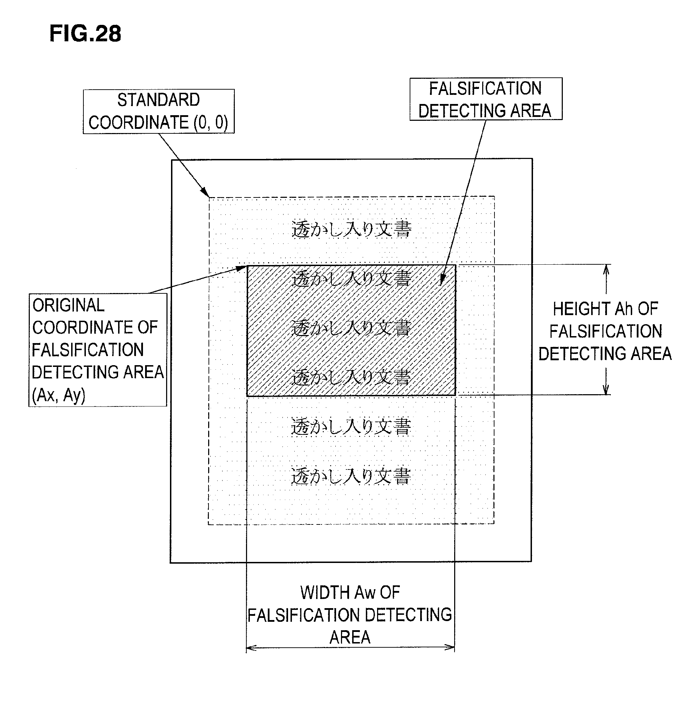

Fig. 28 is an example of the watermarked image.

Similarly to <Document Image Feature Quantity Extracting Step (step S420)> in the second embodiment, the upper left coordinate of the area where the signal unit of the watermarked document image is embedded is set as a standard coordinate (0, 0). In this example, a falsification detecting area is provided in the image 110 so as to detect only the falsification in an important area in the image 110.

As shown in Fig. 28, the upper left coordinate of the falsification detecting area is set at (Ax, Ay) in setting the standard coordinate as an origin and the width of the falsification detecting area is set at Aw and the height thereof at Ah. The standard coordinate is the upper left coordinate of the watermarked area. At this time, the feature image is either the image where the falsification detecting area is cut off from the image 110 or the reduced image thereof. In the watermark information synthesizing part 130, a falsification detecting area information (for example, upper left coordinate, width, height) is synthesized as the watermark information along with the feature image, with the image 110.

(Watermarked Image Inputting Part 200)

The watermarked image inputting part 200 restores the feature image 250 embedded in the watermarked image outputting part 100 by retrieving the watermarked information from the input image 210. This operation is the same as in the first and second embodiments.

(Input Image Deforming Part 230)

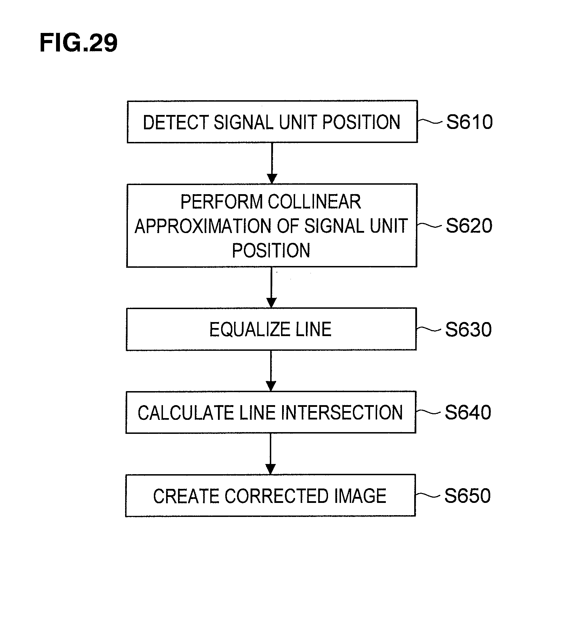

Fig. 29 is a flowchart of the input image deforming part 230. Hereinafter, there will be described according to this flowchart.

<Detection of Signal Unit Position (step S610)>

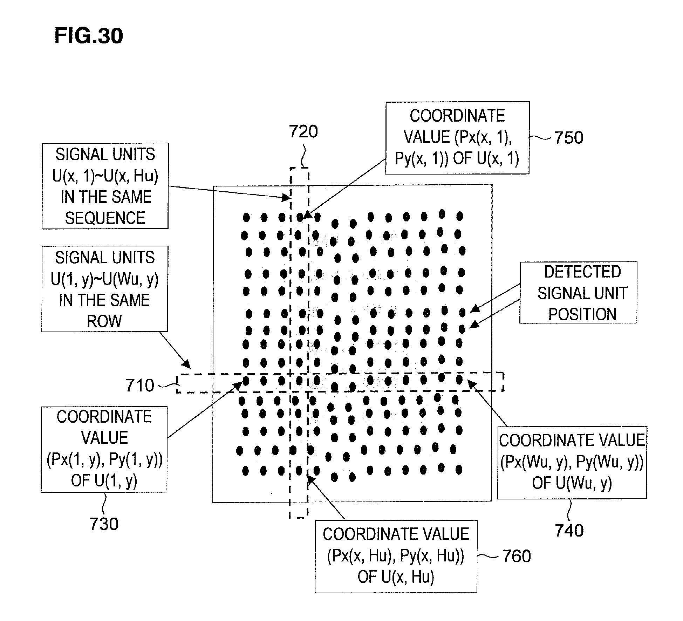

In Fig. 30, the signal unit position detected in the second embodiment is displayed on the input image (watermarked document image) 210. In this Figure, the signal unit is indicated as $U(x, y)$, $x = 1 \sim Wu$, $y = 1 \sim Hu$. $U(1, y) \sim U(Wu, y)$ indicates the signal units in the same row (numeral 710 in Fig. 30) while $U(x, 1) \sim U(x, Hu)$ indicates the signal units in the same sequence (numeral 720 in Fig. 30). $U(1, y) \sim U(Wu, y)$ and $U(x, 1) \sim U(x, Hu)$ are not arranged on the same line and deviate minutely from right to left or up and down.

In addition, the coordinate value P on the input image of the signal unit $U(x, y)$ is indicated as $(Px(x, y), Py(x, y))$, $x = 1 \sim Wu$, $y = 1 \sim Hu$ (numerals 730, 740, 750 and 760 in Fig. 30). However, the filtering is performed for the input image every N pixels vertically and horizontally (N is a natural number). This filtering is carried out similarly to <Signal Position Searching Step (step S320)> in the first embodiment. P is the value where the coordinate values in each signal unit in the signal output value matrix are simply multiplied N times vertically and horizontally.

<Collinear Approximation of Signal Unit Position (step S620)>

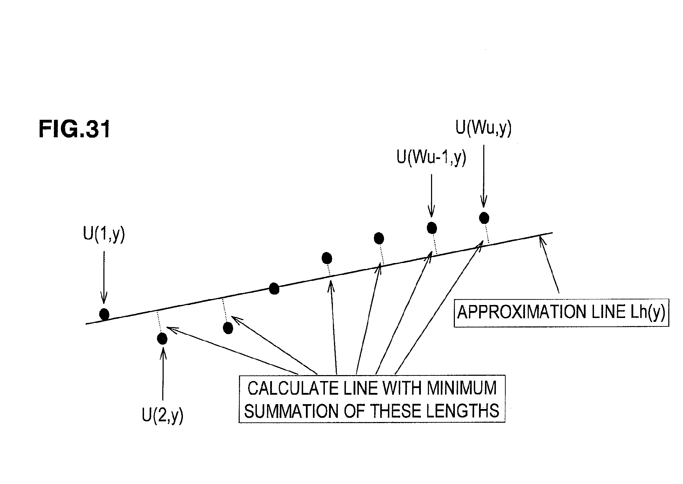

Collinear approximation is performed on the signal unit position in row and sequence directions. Fig. 31 is an example of collinear approximation in the row direction. In this Figure, the positions of the signal units U(1, y)~U(Wu, y) in the same row are approximated by a line Lh(y). An approximation line is a line where the summation of the positions of each signal unit and the line Lh(y) becomes minimum. Such a line can be obtained by a common method such as least squares method or principal component analysis. The collinear approximation in the row direction is performed on all rows while the collinear approximation in the sequence direction is performed on all sequences.

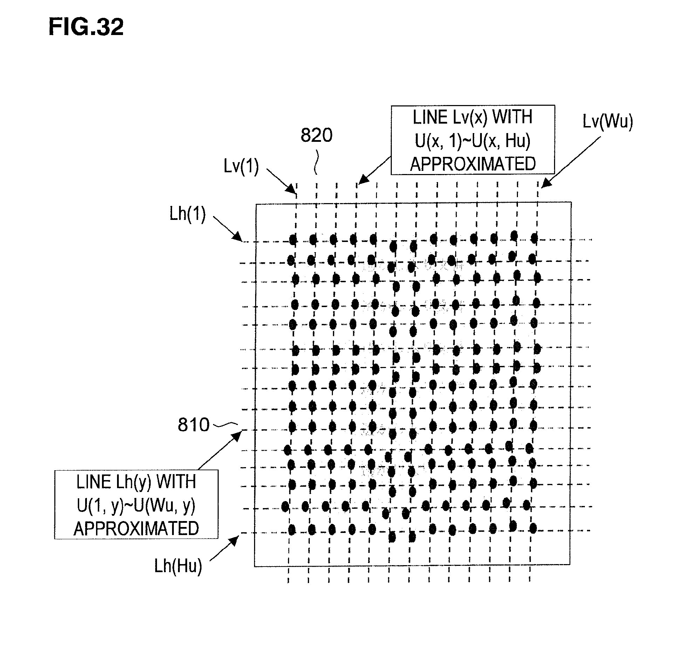

Fig. 32 is an example of a result of collinear approximation in the sequence direction. In this Figure, the signal unit is indicated as U(x, y), x=1~Wu,y=1~Hu. Lh(y) is a line with U(1, y)~U(Wu, y) approximated (numeral 810 in Fig. 32) while Lv(x) is a line with U(x, 1)~U(x, Hu) approximated (numeral 820 in Fig. 32).

<Line Equalization (step S630)>

The line approximated in step S620 has uneven inclination and uneven position of the line individually due to a deviation in bunches of the detected signal unit position. In step S630, equalization is performed by correcting the inclination and position of the line individually.

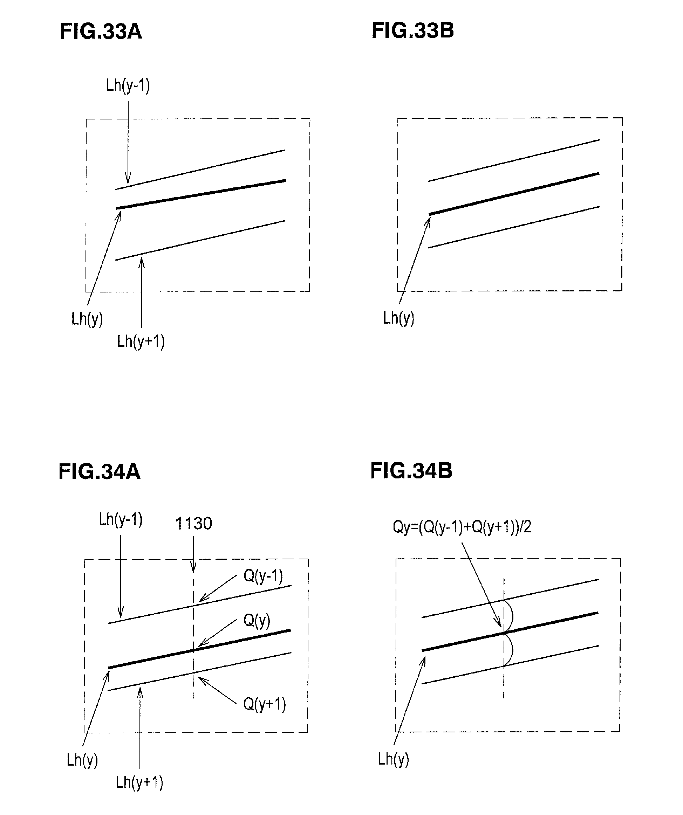

Figs. 33A and 33B is an example of correction of inclination of the approximation line Lh(y) in the row direction. Fig. 33A shows the state before correction while Fig. 33B shows the state after correction. When the inclination of Lh(y) in Fig. 33A is set at Th(y), the inclination of Lh(y) is corrected to be an average value of the inclination of an adjacent line to Lh(y). More specifically, there is set as Th(y) = AVERAGE(Th(y - Nh)~Th(y + Nh)). AVERAGE(A~B) is the expression for calculating the average value of A~B and Nh is an arbitrary natural number. In the case of y - Nh < 1, there is set as Th(y) = AVERAGE(Th(1)~Th(y + Nh)) while in the case of y + Nh > Hu, there is set as Th(y) = AVERAGE(Th(y-Nh)~Th(Hu)). Figs. 33A and 33B is an example of setting Nh at 1 and Fig. 33B shows an example where Lh(y) is corrected by the average value of the inclination of the line of Lh(y - 1)~Lh(y + 1).

Figs. 34A and 34B is an example of correction of inclination of the approximation line Lh(y) in the sequence direction. Fig. 34A shows the state before correction while Fig. 34B shows the state after correction. In Fig. 34A, when an arbitrary standard line 1130 is set in a vertical direction and the y-coordinate at the intersection of this line and Lh(y) is set at Q(y), there is corrected so that Q(y) becomes an average at the adjacent line position to Lh(y). More specifically, there is set as Q(y) = AVERAGE(Q(y - Mh)~Q(y + Mh)), in which Mh is an arbitrary natural number. In the case of y - Mh < 1 or y + Mh > Hu, no change is carried out. Figs. 34A and 34B shows an example of setting Mh at 1 and Fig. 34B shows an example where Lh(y) is corrected by a midpoint (average) of the positions of the lines Lh(y -1) and Lh (y + 1). This process can be omitted.

<Calculation of Line Intersection (step 5640)>

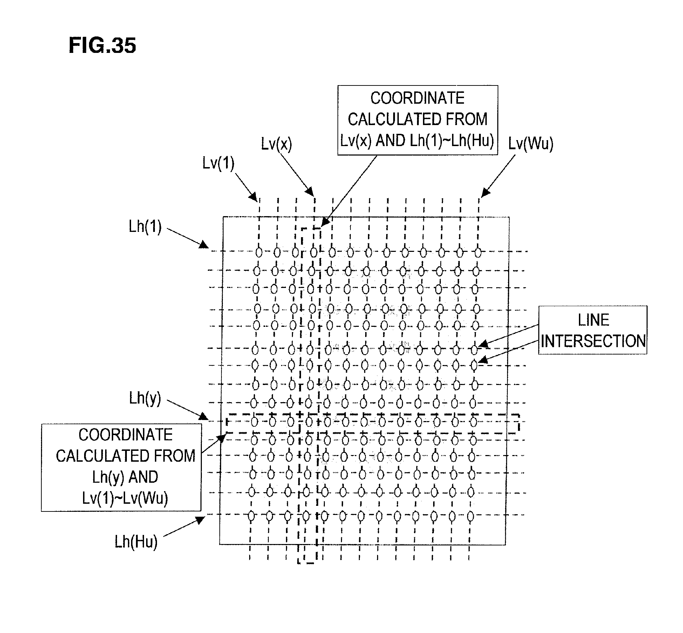

There is calculated the intersection of the approximation lines in the row and sequence directions. Fig. 35 is an example of calculating the intersection of the approximation line Lh(1)~Lh(Hu) in the row direction and the approximation line Lv(1)~Lv(Wu) in the sequence direction. The intersection is calculated by a general mathematical technique. The intersection calculated here is set as the signal unit position after correction. In other words, the intersection of the approximation line Lh(y) in the row direction and the approximation line Lv(x) in the sequence direction is set as the position (Rx(x, y), Ry(x, y)) after correction of the signal unit U(x, y). For example, the position after correction of the signal unit U(1, 1) is the intersection of Lh(1) and Lv(1).

<Corrected Image Creation (step S650)>

The corrected image is created from the input image in reference to the signal unit position calculated in step S640. Here, there is indicated as Dout the resolution in printing the watermarked image output from the watermarked image outputting part 100 while as Din in obtaining the image to be input to the watermarked image inputting part 200. The size of the corrected image has the same magnification as the input image.

When the signal unit has the size of width Sw and height Sh, the signal unit in the input image has the width indicated as Tw = Sw x Din/Dout, and the height indicated as Th = Sh x Din/Dout. Therefore, when the number of signal units is indicated as Wu in the horizontal direction and Hu in the vertical direction, the size of the corrected image is indicated as the width Wm = Tw x Wu, and the height Hm = Th x Hu. When the position of an arbitrary signal unit U(x, y) in the corrected image is indicated as (Sx(x, y), Sy(x, y)), there can be indicated as Sx = Tw x x, Sy = Th x y since the corrected image is created so as for the signal units to be arranged evenly. It should be noted that the position of the upper leftmost signal unit U(1, 1) is (0, 0), which is the origin of the corrected image.

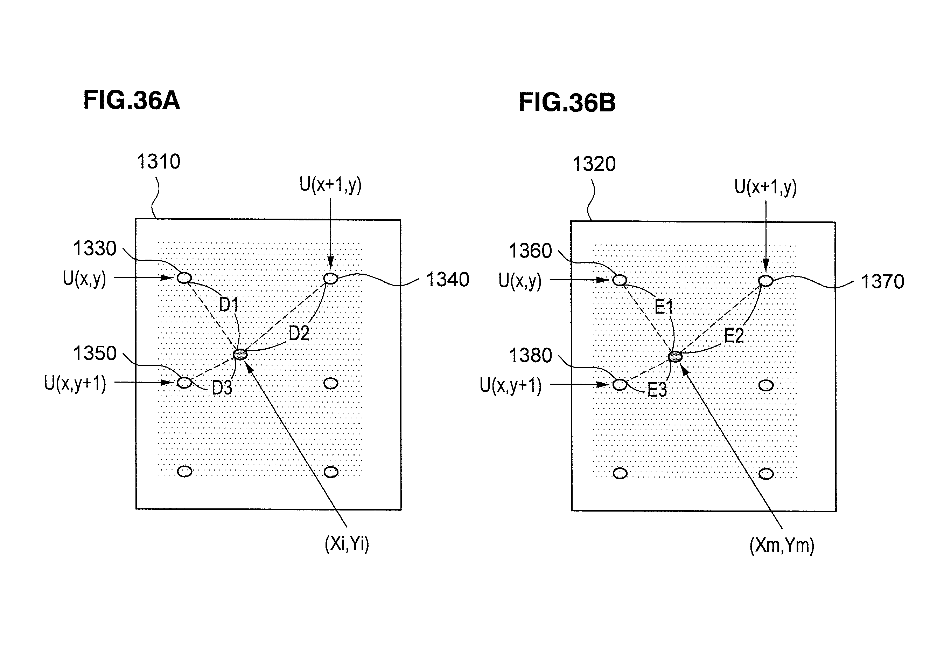

A pixel value Vm at an arbitrary position on the corrected image is calculated by a pixel value Vi of a coordinate (Xi, Yi) on the input image. Figs. 36A and 36B is an example of correlation between these coordinates. Fig. 36A indicates an input image 1310 while Fig. 36B indicates a corrected image 1320. The relation between (Xm, Ym) and (Xi, Yi) will be described in reference to these Figures.

In the corrected image 1320 in Fig. 36B, the nearest signal units in the upper left, upper right and lower left seen by setting (Xm, Ym) as the center are indicated as U(x, y) (coordinate value (Sx(x, y), Sy(x, y)), 1360), U(x + 1, y) (1370), U(x, y + 1)(1380), and the distances therebetween are indicated as E1, E2 and E3 (more specifically, x is the minimum integer not exceeding Xm/Tw + 1, y is the minimum integer not exceeding Xm/Tw + 1), respectively. At this time, when the distances between U(x, y) (coordinate value (Rx(x, y), Ry(x, y)), 1330), U(x + 1 , y)(1340), U(x, y + 1) (1350) and (Xi, Yi) are indicated as D1, D2 and D3 in the input image 1310 in Fig. 36A and the ratio of D1- D3, D1:D2: D3 is equal to E1:E2:E3, the pixel value Vm of (Xm, Ym) is calculated by the pixel value Vi of the coordinate (Xi, Yi) on the input image 1310.

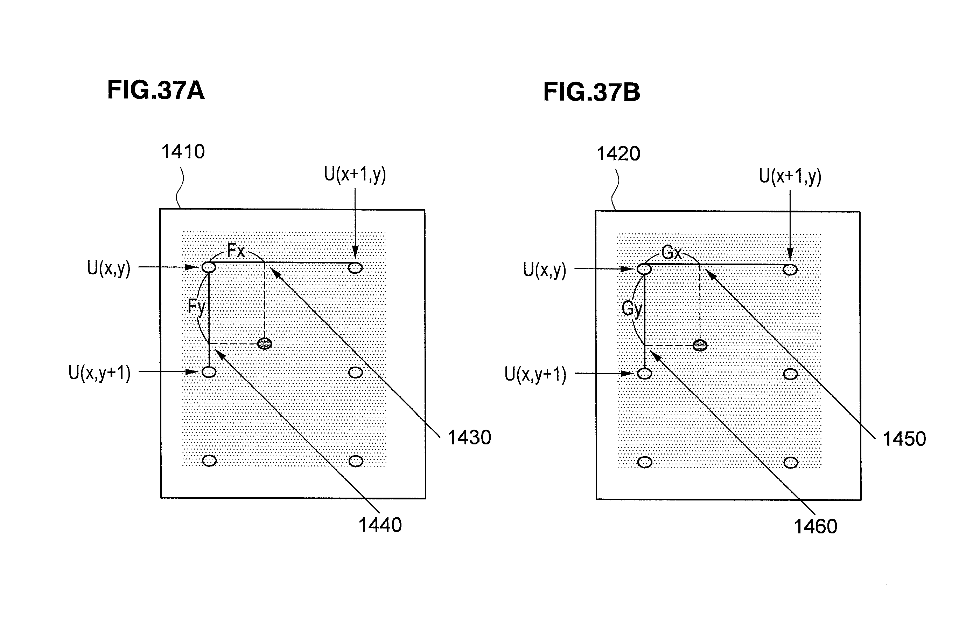

Figs. 37A and 37B shows a concrete calculation method of such (Xi, Yi). A numeral 1430 in Fig. 37A indicates the point Fx = Xm - Sx(x, y) where (Xm, Ym) is projected on the line connecting U(x, y) and U(x + 1, y). A numeral 1440 indicates the point Fy = Ym - Sy(x, y) where (Xm, Ym) is projected on the line connecting U(x, y) and U(x, y + 1). A numeral 1450 in Fig. 37B indicates the point Gx = Xm - Sx(x, y) where (Xm, Ym) is projected on the line connecting U (x, y) and U(x + 1, y). Similarly, a numeral 1460 indicates the point Gy = Ym - Sy(x, y) where (Xm, Ym) is projected on the line connecting U(x, y) and U(x, y + 1). At this time, Fx in the input image 1410 in Fig. 37A is indicated as Fx = Ex/Tw x (Rx(x + 1, y) - Rx(x, y)), from Fx/(Rx(x + 1, y) - Rx(x, y)) = Ex/Tw. Similarly, there is indicated as Fy = Ey/Th x (Ry(x, y + 1) - Ry(x, y)). From this, there is indicated as Xi = Fx + Rx(x, y), Yi = Fy + Ry(x, y).

As above, as the pixel value of an arbitrary point (Xm, Ym) on the corrected image 1420 in Fig. 37B, the pixel value of a point (Xi, Yi) on an input image is set. However, since (Xi, Yi) is generally a real value, the pixel value is set at the pixel value at the closest coordinate to (Xi, Yi) on the input image or the pixel value is calculated from the ratio between the pixel values of the adjacent four pixels and the distances therefrom.

The operation of the input image deforming part 230 has been described.

(Operation of Falsification Judging Part 240)

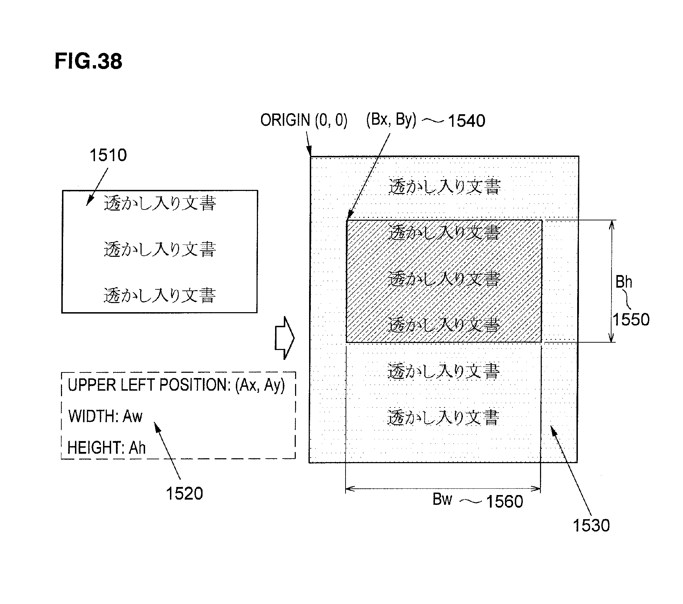

Fig. 38 shows an example of judging a falsification.

From a feature image 1510 restored from the watermark information in Fig. 38, falsification detecting information 1520 (position information on the feature image restored from the watermark information) in Fig. 38 and the ratio between Dout and Din, the feature image is enlarged or reduced Dout/Din times to overlap with the locations of Bx and By on a corrected image 1530. In Fig. 38, there are indicated as Bx = Ax x Din/Dout, By = Ay x Din/Dout, Bw = Aw x Din/Dout and Bh = Ah x Din/Dout.

The corrected image 1530 in Fig. 38 is created by binarizing with a proper threshold and overlapping the enlarged or reduced feature image 1510 so as for the upper left part to fit (Bx, By) on the corrected image. At this time, the difference between two images is regarded as falsification.

(Advantage of the Third Embodiment)

According to this embodiment as described above, since an image having a printed sheet scanned is corrected based on the position information on the signal embedded at the time of printing, an image before printing can be restored without distortion and stretching from the image scanned from a printed matter. Accordingly, the correlation of the position between the images can be determined with high accuracy and further a high-performance detection of falsification can be performed.

Although the preferred embodiment of the present invention has been described referring to the accompanying drawings, the present invention is not restricted to such examples. It is evident to those skilled in the art that the present invention may be modified or changed within a technical philosophy thereof and it is understood that naturally these belong to the technical philosophy of the present invention.

The present invention is applicable to an image processing method and image processing device capable of checking a falsification of a printed ledger sheet on the side that has received the ledger sheet.

**Claims**

1. An image processing device comprising:

a detecting part for detecting a superposing position of a superposed pattern from a pattern-superposed image having an identifiable pattern superposed on an original image; and

a corrected image creating part for creating a corrected image of the pattern-superposed image based on information on the detected superposing position.

2. The image processing device according to claim 1, wherein the identifiable pattern is superposed at a well-known interval on the whole of the original image.

3. The image processing device according to claim 2, wherein the detecting part:

performs collinear approximation for a pair of position information arranged in a horizontal direction and a pair of position information arranged in a vertical direction with regard to the position information on the identifiable pattern detected from the pattern-superposed image; and
calculates an intersection of an approximation line in a horizontal direction and an approximation line in a vertical direction to detect the intersection as the superposing position of the pattern superposed on the original image.

4. The image processing device according to claim 2, wherein the detecting part:

performs collinear approximation for a pair of position information arranged in a horizontal direction and a pair of position information arranged in a vertical direction with regard to the position information on the identifiable pattern detected from the pattern-superposed image;
replaces an inclination of the approximation line in the horizontal direction by an average of the approximation line and another line in the horizontal direction in the vicinity thereof;
replaces an inclination of the approximation line in the vertical direction by an average of the approximation line and another line in the vertical direction in the vicinity thereof; and
calculates an intersection of an approximation line in a horizontal direction and an approximation line in a vertical direction to detect the intersection as the superposing position of the pattern superposed on the original image.

5. The image processing device according to claim 2, wherein the detecting part:

performs collinear approximation for a pair of position information arranged in a horizontal direction and a pair of position information arranged in a vertical direction with regard to the position information on the identifiable pattern detected from the pattern-superposed image;
replaces a position in a vertical direction of the approximation line in the horizontal direction by an average of the approximation line and a position in a vertical direction of another line in the horizontal direction in the vicinity thereof;
replaces a position in a horizontal direction of the approximation line in the vertical direction by an average of the approximation line and a position in a horizontal direction of another line in the vertical direction in the vicinity thereof; and
calculates an intersection of an approximation line in a horizontal direction and an approximation line in a vertical direction to detect the intersection as the superposing position of the pattern superposed on the original image.

6. The image processing device according to one of claims 2, wherein the corrected image creating part creates a corrected image of the pattern-superposed image so that the superposing position detected by the detecting part is arranged at a well-known interval in vertical and horizontal directions and deforms the pattern-superposed image.

7. The image processing device according to claim 6, wherein: an image feature of an arbitrary area of the original image and position information on the area are recorded as visible or invisible information in the original image; the detecting part retrieves the image feature and the position information from the pattern-superposed image; and there is further provided a falsification judging part for judging the difference as a falsification between the retrieved image feature and an image feature at the same position of the deformed pattern-superposed image.

8. The image processing device according to claim 6, wherein: an image feature of an arbitrary area of the original image and position information on the area are recorded separately from the original image; and there is further provided a falsification judging part for judging the difference as a falsification between the recorded image feature and an image feature at the same position of the deformed pattern-superposed image.

9. An image processing method comprising:

a detecting step for detecting a superposing position of a superposed pattern from a pattern-superposed image having an identifiable pattern superposed on an original image; and
a corrected image creating step for creating a corrected image of the pattern-superposed image based on information on the detected superposing position.

**10.** The image processing method according to claim 9, wherein the identifiable pattern is superposed at a well-known interval on the whole of the original image.

**11.** The image processing method according to claim 10, wherein, in the detecting step:

there is performed collinear approximation for a pair of position information arranged in a horizontal direction and a pair of position information arranged in a vertical direction with regard to the position information on the identifiable pattern detected from the pattern-superposed image; and
there is calculated an intersection of an approximation line in a horizontal direction and an approximation line in a vertical direction to detect the intersection as the superposing position of the pattern superposed on the original image.

**12.** The image processing method according to claim 10, wherein, in the detecting step:

there is performed collinear approximation for a pair of position information arranged in a horizontal direction and a pair of position information arranged in a vertical direction with regard to the position information on the identifiable pattern detected from the pattern-superposed image;
there is replaced an inclination of the approximation line in the horizontal direction by an average of the approximation line and another line in the horizontal direction in the vicinity thereof;
there is replaced an inclination of the approximation line in the vertical direction by an average of the approximation line and another line in the vertical direction in the vicinity thereof; and
there is calculated an intersection of an approximation line in a horizontal direction and an approximation line in a vertical direction to detect the intersection as the superposing position of the pattern superposed on the original image.

**13.** The image processing method according to claim 10, wherein, in the detecting step:

there is performed collinear approximation for a pair of position information arranged in a horizontal direction and a pair of position information arranged in a vertical direction with regard to the position information on the identifiable pattern detected from the pattern-superposed image;
there is replaced a position in a vertical direction of the approximation line in the horizontal direction by an average of the approximation line and a position in a vertical direction of another line in the horizontal direction in the vicinity thereof;
there is replaced a position in a horizontal direction of the approximation line in the vertical direction by an average of the approximation line and a position in a horizontal direction of another line in the vertical direction in the vicinity thereof; and
there is calculated an intersection of an approximation line in a horizontal direction and an approximation line in a vertical direction to detect the intersection as the superposing position of the pattern superposed on the original image.

**14.** The image processing method according to one of claims 10, wherein, in the corrected image creating step, there is created a corrected image of the pattern-superposed image so that the superposing position detected in the detecting step is arranged at a well-known interval in vertical and horizontal directions and deforms the pattern-superposed image.

**15.** The image processing method according to claim 14, wherein: an image feature of an arbitrary area of the original image and position information on the area are recorded as visible or invisible information in the original image;
in the detecting step there are retrieved the image feature and the position information from the pattern-superposed image; and
there is further provided a falsification judging step for judging the difference as a falsification between the retrieved image feature and an image feature at the same position of the deformed pattern-superposed image.

**16.** The image processing method according to claim 14, wherein: an image feature of an arbitrary area of the original image and position information on the area are recorded separately from the original image; and

there is further provided a falsification judging step for judging the difference as a falsification between the recorded image feature and an image feature at the same position of the deformed pattern-superposed image.

# FIG.1

```
                          ┌─ 10
        ┌─────────────────────────────────────────────────┐
        │                                                   │
        │      ┌─ 15                        ┌─ 16           │
        │  ╭─────────────────╮       ╭─────────────────────╮│
        │  │ DOCUMENT IMAGE  │       │CONFIDENTIAL INFORMATION│
        │  ╰─────────────────╯       ╰─────────────────────╯│
        │          │                         │              │
        │          └──────────┬──────────────┘              │
        │                     ▼                             │
        │         ┌──────────────────────────┐              │
        │         │  WATERMARKED DOCUMENT     │─ 13          │
        │         │  IMAGE SYNTHESIZING PART  │              │
        │         └──────────────────────────┘              │
        │                     │                             │
        │                     ▼                             │
        │         ┌──────────────────────────┐              │
        │         │      OUTPUT DEVICE        │─ 14          │
        │         └──────────────────────────┘              │
        │                     │                             │
        └─────────────────────┼─────────────────────────────┘
                              ▼
              ┌──────────────────────────────┐
              │  PRINTED DOCUMENT (PAPER)     │─ 20
              └──────────────────────────────┘
                              │
        ┌─────────────────────┼─────────────────────────────┐
        │                     ▼                             │
        │         ┌──────────────────────────┐              │
        │         │       INPUT DEVICE        │─ 31          │
        │         └──────────────────────────┘              │
        │                     │                             │
        │                     ▼                             │
        │         ┌──────────────────────────┐              │
        │         │  WATERMARK DETECTING PART │─ 32          │
        │         └──────────────────────────┘              │
        │                                                   │
        └─────────────────────────────────────────────────┘
                   └─ 30
```

# FIG.2

```
          ┌─────────────┐
          │    START    │
          └─────────────┘
                 │
                 ▼
   ┌───────────────────────────┐
   │        CODE DATA          │──── S101
   └───────────────────────────┘
                 │
                 ▼
   ┌───────────────────────────┐
   │     ALLOCATE WATERMARK    │──── S102
   │    SIGNAL TO EACH SYMBOL  │
   └───────────────────────────┘
                 │
                 ▼
   ┌───────────────────────────┐
   │     ARRANGE WATERMARK     │──── S103
   │          SIGNAL           │
   └───────────────────────────┘
                 │
                 ▼
          ┌─────────────┐
          │     END     │
          └─────────────┘
```

## FIG.3A

Sw = 12 pixels

DIRECTION WHERE DOTS ARE DENSELY ARRANGED

PROPAGATION DIRECTION OF WAVE

Sh = 12 pixels

DOT

ONE WAVELENGTH

## FIG.3B

PROPAGATION DIRECTION OF WAVE

# FIG.4

SIGNAL UNIT WIDTH BASED ON
PROPAGATION DIRECTION OF WAVE

LOOP OF
MINIMUM
VALUE

LOOP OF
MAXIMUM
VALUE

ONE CYCLE

**FIG.5A**

PROPAGATION
DIRECTION OF WAVE

**FIG.5B**

PROPAGATION
DIRECTION OF WAVE

**FIG.5C**

PROPAGATION
DIRECTION OF WAVE

## FIG.6A

UNIT E

## FIG.6B

UNIT A

## FIG.6C

UNIT B

## FIG.7A

UNIT A
(SYMBOL 0)

UNIT B
(SYMBOL 1)

UNIT E
(NO SYMBOL)

UNIT PATTERN

## FIG.7B

UNIT A (SYMBOL 0)

UNIT B (SYMBOL 1)

UNIT E (NO SYMBOL)

UNIT PATTERN

## FIG.7C

UNIT PATTERN

UNIT PATTERN
INDICATING SYMBOL 0

UNIT PATTERN
INDICATING SYMBOL 1

# FIG.8

```
            ┌──────────────┐
            │    START     │
            └──────┬───────┘
                   │
                   ▼
        ┌──────────────────────┐
        │      CODE DATA       │ ～S201
        └──────────┬───────────┘
                   │
                   ▼
        ┌──────────────────────┐
        │  CALCULATE NUMBER OF  │
        │ REPETITION OF INFORMATION │ ～S202
        └──────────┬───────────┘
                   │
                   ▼
        ┌──────────────────────┐
        │ EMBED CODE LENGTH DATA │ ～S203
        └──────────┬───────────┘
                   │
                   ▼
        ┌──────────────────────┐
        │   EMBED DATA CODE    │ ～S204
        └──────────┬───────────┘
                   │
                   ▼
            ┌──────────────┐
            │     END      │
            └──────────────┘
```

## FIG.9

UNIT PATTERN WITH BIT STRING INDICATING CODE LENGTH EMBEDDED

UNIT PATTERN

| 0 | 1 | 2 | 3 | 4 | 5 | 6 | 7 | 8 |
|---|---|---|---|---|---|---|---|---|
| 9 | 10 | 11 | | | | | | |

| | | | 0 | 1 | 2 | 3 | 4 | 5 |
|---|---|---|---|---|---|---|---|---|
| 6 | 7 | 8 | 9 | 10 | 11 | | | |

| | | | | | 0 | 1 | 2 |
|---|---|---|---|---|---|---|---|
| 3 | 4 | 5 | 6 | 7 | 8 | 9 | 10 | 11 |

| 0 | 1 | 2 | 3 | 4 | 5 | 6 | 7 | 8 |
|---|---|---|---|---|---|---|---|---|
| 9 | 10 | 11 | | | | | | |

| | | | 0 | 1 | 2 | 3 | 4 | 5 |
|---|---|---|---|---|---|---|---|---|
| 6 | 7 | 8 | 9 | 10 | 11 | | | |

| | | | | | 0 | 1 | 2 |
|---|---|---|---|---|---|---|---|
| 3 | 4 | 5 | 6 | 7 | 8 | 9 | 10 | 11 |

| 0 | 1 | 2 | 3 | 4 | 5 | 6 | 7 | 8 |
|---|---|---|---|---|---|---|---|---|
| 9 | 10 | 11 | | | | | | |

| | | | 0 | 1 | 2 | 3 | 4 | 5 |
|---|---|---|---|---|---|---|

UNIT PATTERN MATRIX

DATA CODE UNIT    CODE LENGTH AREA

WATERMARKED IMAGE WITH CONFIDENTIAL INFORMATION REPETITIVELY EMBEDDED

INFORMATION AREA

| 0 | 1 | 2 | 3 | 4 | 5 | 6 | 7 | 8 |
|---|---|---|---|---|---|---|---|---|
| 9 | 10 | 11 | 0 | 1 | 2 | 3 | 4 | 5 |
| 6 | 7 | 8 | 9 | 10 | 11 | 0 | 1 | 2 |
| 3 | 4 | 5 | 6 | 7 | 8 | 9 | 10 | 11 |
| 0 | 1 | 2 | 3 | 4 | 5 | 6 | 7 | 8 |
| 9 | 10 | 11 | 0 | 1 | 2 | 3 | 4 | 5 |
| 6 | 7 | 8 | 9 | 10 | 11 | 0 | 1 | 2 |
| 3 | 4 | 5 | 6 | 7 | 8 | 9 | 10 | 11 |
| 0 | 1 | 2 | 3 | 4 | 5 | 6 | 7 | 8 |
| 9 | 10 | 11 | 0 | 1 | 2 | 3 | 4 | 5 |

## FIG.10

すかし入り文書画像の例

すかし入り文書画像の例

すかし入り文書画像の例

すかし入り文書画像の例

すかし入り文書画像の例

すかし入り文書画像の例

すかし入り文書画像の例

すかし入り文書画像の例

DOCUMENT IMAGE

WATERMARKED IMAGE

すかし入り文書画像の例

すかし入り文書画像の例

すかし入り文書画像の例

すかし入り文書画像の例

すかし入り文書画像の例

すかし入り文書画像の例

すかし入り文書画像の例

すかし入り文書画像の例

WATERMARKED DOCUMENT IMAGE

⊗ AND OPERATION

## FIG.11

すかし入
DOCUMENT IMAGE

WATERMARKED IMAGE

すかし入
WATERMARKED DOCUMENT IMAGE

# FIG.12

```
                    ┌─────────────┐
                    │    START    │
                    └──────┬──────┘
                           │
                           ▼
              ┌──────────────────────────┐
              │       INPUT IMAGE        │────── S301
              └────────────┬─────────────┘
                           │
                           ▼
              ┌──────────────────────────┐
              │      PERFORM SIGNAL       │────── S310
              │    DETECTION FILTERING    │
              └────────────┬─────────────┘
                           │
                           ▼
              ┌──────────────────────────┐
              │   SEARCH SIGNAL POSITION  │────── S320
              └────────────┬─────────────┘
                           │
                           ▼
              ┌──────────────────────────┐
              │  DETERMINE SIGNAL SYMBOL  │────── S330
              └────────────┬─────────────┘
                           │
                           ▼
              ┌──────────────────────────┐
              │  DETERMINE SIGNAL BORDER  │────── S340
              └────────────┬─────────────┘
                           │
                           ▼
              ┌──────────────────────────┐
              │    DECODE INFORMATION     │────── S305
              └────────────┬─────────────┘
                           │
                           ▼
                    ┌─────────────┐
                    │     END     │
                    └─────────────┘
```

# FIG.13

FILTER A

FILTER B

CALCULATE CONVOLUTION ⇒ OUTPUT FROM FILTER A (47) > OUTPUT FROM FILTER B (13)

INPUT IMAGE

INPUT IMAGE (PARTIALLY ENLARGED)

STORE MAXIMUM VALUE OF FILTER OUTPUT VALUE

| 30 | 33 | 43 | 27 | 10 | 22 | 50 | 13 |
|----|----|----|----|----|----|----|----|
| 48 | 100 | 130 | 87 | 22 | 72 | 105 | 70 |
| 50 | 150 | 205 | 143 | 35 | 135 | 211 | 120 |
| 45 | 98 | 120 | 90 | 10 | 75 | 111 | 85 |
| 20 | 32 | 50 | 35 | 5 | 28 | 56 | 19 |
| 35 | 94 | 122 | 98 | 7 | 78 | 133 | 83 |
| 47 | 158 | 243 | 156 | 65 | 121 | 237 | 136 |
| 38 | 101 | 135 | 85 | 20 | 74 | 127 | 76 |

FILTER OUTPUT VALUE MATRIX (PARTIALLY ENLARGED)

FILTER OUTPUT VALUE MATRIX

STORE "0" IN THE CASE WHERE OUTPUT FROM FILTER A IS LARGE STORE "1" IN OTHER CASES

| 0 | 1 | 1 | 1 | 1 | 1 | 0 | 1 |
|---|---|---|---|---|---|---|---|
| 0 | 1 | 1 | 0 | 1 | 0 | 0 | 0 |
| 1 | 1 | 1 | 1 | 0 | 0 | 0 | 0 |
| 1 | 1 | 0 | 1 | 1 | 0 | 0 | 0 |
| 1 | 1 | 0 | 1 | 1 | 0 | 1 | 0 |
| 1 | 0 | 1 | 0 | 1 | 1 | 1 | 1 |
| 0 | 0 | 0 | 0 | 1 | 1 | 1 | 1 |
| 1 | 0 | 0 | 0 | 0 | 1 | 1 | 0 |

FILTER TYPE MATRIX (PARTIALLY ENLARGED)

FILTER TYPE MATRIX

EP 1 798 950 A1

FIG.14

# FIG.15

FREQUENCY OF UNIT A

UPPER/LOWER END OF
EMBEDDED SIGNAL

SYMBOL MATRIX

INPUT IMAGE

COORDINATE IN
VERTICAL DIRECTION

## FIG.16

| 0 | 1 | 0 | 1 | 0 | 1 | 0 | 1 | 0 |
|---|---|---|---|---|---|---|---|---|
| 0 | 1 | 0 | 1 | 0 | 1 | 0 | 1 | 0 |
| 0 | 1 | 0 | 1 | 0 | 1 | 0 | 1 | 0 |
| 0 | 1 | 0 | 1 | 0 | 1 | 0 | 1 | 0 |
| 0 | 1 | 0 | 1 | 0 | 1 | 0 | 1 | 0 |
| 0 | 1 | 0 | 1 | 0 | 1 | 0 | 1 | 0 |
| 0 | 1 | 0 | 1 | 0 | 1 | 0 | 1 | 0 |
| 0 | 1 | 0 | 1 | 0 | 1 | 0 | 1 | 0 |
| 0 | 1 | 0 | 1 | 0 | 1 | 0 | 1 | 0 |
| 0 | 1 | 0 | 1 | 0 | 1 | 0 | 1 | 0 |
| 0 | 1 | 0 | 1 | 0 | 1 | 0 | 1 | 0 |

すかし入り文書画像の例

(1) SYMBOL DETECTION

(2) RESTORATION OF DATA CODE

CONFIDENTIAL INFORMATION

010101..........010101

(3) DECODING AND INFORMATION RETRIEVAL

# FIG.17

```
              ┌─────────────┐
              │    START    │
              └──────┬──────┘
                     │
                     ▼
        ┌──────────────────────┐
        │ RETRIEVE CODE LENGTH │ ～S401
        │        DATA          │
        └──────────┬───────────┘
                   │
                   ▼
        ┌──────────────────────┐
        │ CALCULATE REPETITION OF │ ～S402
        │     INFORMATION      │
        └──────────┬───────────┘
                   │
                   ▼
        ┌──────────────────────┐
        │  RETRIEVE DATA CODE  │ ～S403
        └──────────┬───────────┘
                   │
                   ▼
        ┌──────────────────────┐
        │ RECONFIGURE DATA CODE │ ～S404
        └──────────┬───────────┘
                   │
                   ▼
              ┌─────────────┐
              │     END     │
              └─────────────┘
```

# FIG.18

UNIT PATTERN RETRIEVED AS BIT STRING INDICATING CODE LENGTH

| | | | | | | | | |
|---|---|---|---|---|---|---|---|---|

| 0 | 1 | 2 | 3 | 4 | 5 | 6 | 7 | 8 |
|---|---|---|---|---|---|---|---|---|
| 9 | 10 | 11 | 0 | 1 | 2 | 3 | 4 | 5 |
| 6 | 7 | 8 | 9 | 10 | 11 | 0 | 1 | 2 |
| 3 | 4 | 5 | 6 | 7 | 8 | 9 | 10 | 11 |
| 0 | 1 | 2 | 3 | 4 | 5 | 6 | 7 | 8 |
| 9 | 10 | 11 | 0 | 1 | 2 | 3 | 4 | 5 |
| 6 | 7 | 8 | 9 | 10 | 11 | 0 | 1 | 2 |
| 3 | 4 | 5 | 6 | 7 | 8 | 9 | 10 | 11 |
| 0 | 1 | 2 | 3 | 4 | 5 | 6 | 7 | 8 |
| 9 | 10 | 11 | 0 | 1 | 2 | 3 | 4 | 5 |

UNIT PATTERN MATRIX

| 0 | 1 | 2 | 3 | 4 | 5 | 6 | 7 | 8 |
|---|---|---|---|---|---|---|---|---|
| 9 | 10 | 11 | | | | | | |
| | | | 0 | 1 | 2 | 3 | 4 | 5 |
| 6 | 7 | 8 | 9 | 10 | 11 | | | |
| | | | | | | 0 | 1 | 2 |
| 3 | 4 | 5 | 6 | 7 | 8 | 9 | 10 | 11 |

| 0 | 1 | 2 | 3 | 4 | 5 | 6 | 7 | 8 |
|---|---|---|---|---|---|---|---|---|
| 9 | 10 | 11 | | | | | | |
| | | | 0 | 1 | 2 | 3 | 4 | 5 |
| 6 | 7 | 8 | 9 | 10 | 11 | | | |
| | | | | | | 0 | 1 | 2 |
| 3 | 4 | 5 | 6 | 7 | 8 | 9 | 10 | 11 |

| 0 | 1 | 2 | 3 | 4 | 5 | 6 | 7 | 8 |
|---|---|---|---|---|---|---|---|---|
| 9 | 10 | 11 | | | | | | |
| | | | 0 | 1 | 2 | 3 | 4 | 5 |

RETRIEVED DATA CODE UNIT

# FIG.19

BIT STRING (DATA CODE) RECONFIGURED BY
CERTAINTY OPERATION

# FIG.20

~10

| 15 | 16 |
|---|---|
| DOCUMENT IMAGE | CONFIDENTIAL INFORMATION |

WATERMARKED DOCUMENT IMAGE SYNTHESIZING PART ~13

OUTPUT DEVICE ~14

PRINTED DOCUMENT (PAPER) ~20

INPUT DEVICE ~31

WATERMARK DETECTING PART ~32

FALSIFICATION JUDGING PART ~33

~30

# FIG.21

```
            ┌──────────────┐
            │    START     │
            └──────┬───────┘
                   │
                   ▼
      ┌─────────────────────────┐
      │      INPUT IMAGE        │──── S410
      └───────────┬─────────────┘
                  │
                  ▼
      ┌─────────────────────────┐
      │  EXTRACT DOCUMENT IMAGE │──── S420
      │    FEATURE QUANTITY     │
      └───────────┬─────────────┘
                  │
                  ▼
      ┌─────────────────────────┐
      │   BINARIZE INPUT IMAGE  │──── S430
      └───────────┬─────────────┘
                  │
                  ▼
      ┌─────────────────────────┐
      │    CREATE INPUT IMAGE   │──── S440
      │    FEATURE QUANTITY     │
      └───────────┬─────────────┘
                  │
                  ▼
      ┌─────────────────────────┐
      │    COMPARE FEATURE      │──── S450
      │       QUANTITY          │
      └───────────┬─────────────┘
                  │
                  ▼
            ┌──────────────┐
            │     END      │
            └──────────────┘
```

# FIG.22

EMBEDDED SIGNAL UNIT UPPER LEFT: COORDINATE POSITION CONTROL POINT P

REDUCED BINARY IMAGE (DOCUMENT IMAGE)

UPPER LEFT OF DETECTED SIGNAL BORDER: COORDINATE POSITION CONTROL POINT Q

IN THE CASE WHERE DIFFERENCE IS AT THRESHOLD OR MORE, CORRESPONDING AREA IS JUDGED TO BE FALSIFICATION

COMPARE FEATURE QUANTITY (REDUCED BINARY IMAGE) CORRESPONDING TO THE SAME SIGNAL UNIT POSITION

透かし入り

文書データ

透かし入り

文書データ

なし

透かし入り

文書データ

透かし入り

文書データ

透かし入り

文書データ

透かしなし

文書データ

(x0, y0): SIGNAL UNIT POSITION SETTING P/Q AS STANDARD

(x1, y1): SIGNAL UNIT POSITION SETTING P/Q AS STANDARD

WATERMARKED DOCUMENT IMAGE

INPUT IMAGE

EP 1 798 950 A1

**FIG.23**

EMBEDDED SIGNAL UNIT UPPER LEFT: COORDINATE POSITION CONTROL POINT P

IN THE CASE WHERE DIFFERENCE IS AT THRESHOLD OR MORE, CORRESPONDING AREA IS JUDGED TO BE FALSIFICATION

UPPER LEFT OF DETECTED SIGNAL BORDER: COORDINATE POSITION CONTROL POINT Q

REDUCED BINARY IMAGE (DOCUMENT IMAGE)

REDUCED BINARY IMAGE (CORRECTED IMAGE)

CORRECT IMAGE SO THAT COORDINATE OF POSITION OF SIGNAL UNIT CORRESPONDS

COMPARE FEATURE QUANTITY (REDUCED BINARY IMAGE) CORRESPONDING TO THE SAME SIGNAL UNIT POSITION

透かし入り
文書データ
透かし入り
文書データ

透かし入り
文書データ
透かしなし
文書データ

透かし入り
文書データ
透かし入り
文書データ

透かし入り
文書データ
透かしなし
文書データ

透かし入り
文書データ
透かしなし
文書データ

WATERMARKED DOCUMENT IMAGE

(x0, y0): SIGNAL UNIT POSITION SETTING P/Q AS STANDARD

(x1, y1): SIGNAL UNIT POSITION SETTING P/Q AS STANDARD

CORRECTED IMAGE

INPUT IMAGE

EP 1 798 950 A1

FIG.24

DETECTED
SIGNAL UNIT
POSITION

# FIG.25

NONUNIFORM ARRANGEMENT DUE TO ROTATION OF INPUT IMAGE AND SO ON

NONUNIFORM ARRANGEMENT DUE TO LOCAL DISTORTION OF PAPER AND SO ON

# FIG.26

110

IMAGE

100

FEATURE IMAGE GENERATING PART — 120

WATERMARK INFORMATION SYNTHESIZING PART — 130

OUTPUT IMAGE — 140

# FIG.27

```
                                    ⌒210
        ┌─────────────────────────┐
        │       INPUT IMAGE       │
        └─────────────────────────┘                    ⌒200
                     ┆
    ┌ ─ ─ ─ ─ ─ ┆ ─ ─ ─ ─ ─ ─ ─ ─ ─ ─ ─ ─ ─ ─ ─ ─ ─ ─ ─ ─ ┐
    │                ↓         ⌒220                         ⌒250
    │  ┌─────────────────────────┐      ┌─────────────────────────┐  │
    │  │  WATERMARK INFORMATION  │ ───► │      FEATURE IMAGE       │  │
    │  │     EXTRACTING PART     │      └─────────────────────────┘  │
    │  └─────────────────────────┘                                   │
    │                ↓         ⌒230                         ⌒260
    │  ┌─────────────────────────┐      ┌─────────────────────────┐  │
    │  │  INPUT IMAGE DEFORMING  │ ───► │     CORRECTED IMAGE      │  │
    │  │          PART           │      └─────────────────────────┘  │
    │  └─────────────────────────┘                                   │
    │                ↓         ⌒240                                   │
    │  ┌─────────────────────────┐                                   │
    │  │  FALSIFICATION JUDGING  │                                   │
    │  │          PART           │                                   │
    │  └─────────────────────────┘                                   │
    └ ─ ─ ─ ─ ─ ─ ─ ─ ─ ─ ─ ─ ─ ─ ─ ─ ─ ─ ─ ─ ─ ─ ─ ─ ─ ─ ┘
```

# FIG.28

STANDARD
COORDINATE (0, 0)

FALSIFICATION
DETECTING AREA

透かし入り文書

透かし入り文書

透かし入り文書

透かし入り文書

透かし入り文書

透かし入り文書

ORIGINAL
COORDINATE OF
FALSIFICATION
DETECTING AREA
(Ax, Ay)

HEIGHT Ah OF
FALSIFICATION
DETECTING AREA

WIDTH Aw OF
FALSIFICATION DETECTING
AREA

# FIG.29

```
┌─────────────────────────────┐
│  DETECT SIGNAL UNIT POSITION │──∽S610
└─────────────────────────────┘
              │
              ▼
┌─────────────────────────────┐
│     PERFORM COLLINEAR        │
│ APPROXIMATION OF SIGNAL UNIT │──∽S620
│          POSITION            │
└─────────────────────────────┘
              │
              ▼
┌─────────────────────────────┐
│        EQUALIZE LINE         │──∽S630
└─────────────────────────────┘
              │
              ▼
┌─────────────────────────────┐
│  CALCULATE LINE INTERSECTION │──∽S640
└─────────────────────────────┘
              │
              ▼
┌─────────────────────────────┐
│    CREATE CORRECTED IMAGE    │──∽S650
└─────────────────────────────┘
```

# FIG.30

SIGNAL UNITS
U(x, 1)~U(x, Hu)
IN THE SAME
SEQUENCE

SIGNAL UNITS
U(1, y)~U(Wu, y)
IN THE SAME
ROW

720

COORDINATE
VALUE (Px(x, 1),
Py(x, 1)) OF U(x, 1) ~750

DETECTED
SIGNAL UNIT
POSITION

710

COORDINATE
VALUE
(Px(1, y), Py(1, y))
OF U(1, y)

730

COORDINATE VALUE
(Px(Wu, y), Py(Wu, y))
OF U(Wu, y)

740

COORDINATE VALUE
(Px(x, Hu), Py(x, Hu)) ~760
OF U(x, Hu)

**FIG.31**

U(Wu,y)

U(Wu-1,y)

U(1,y)

APPROXIMATION LINE Lh(y)

CALCULATE LINE WITH MINIMUM
SUMMATION OF THESE LENGTHS

U(2,y)

# FIG.32

LINE Lv(x) WITH
U(x, 1)~U(x, Hu)
APPROXIMATED

Lv(Wu)

820

Lv(1)

Lh(1)

810

LINE Lh(y) WITH
U(1, y)~U(Wu, y)
APPROXIMATED

Lh(Hu)

**FIG.33A**

Lh(y-1)

Lh(y)
Lh(y+1)

**FIG.33B**

Lh(y)

**FIG.34A**

Lh(y-1)    1130

Q(y-1)

Q(y)

Q(y+1)

Lh(y)
Lh(y+1)

**FIG.34B**

Qy=(Q(y-1)+Q(y+1))/2

Lh(y)

# FIG.35

COORDINATE
CALCULATED FROM
Lv(x) AND Lh(1)~Lh(Hu)

Lv(x)

Lv(1)

Lv(Wu)

Lh(1)

LINE
INTERSECTION

Lh(y)

COORDINATE
CALCULATED FROM
Lh(y) AND
Lv(1)~Lv(Wu)

Lh(Hu)

FIG.36A

FIG.36B

EP 1 798 950 A1

EP 1 798 950 A1

**FIG.37A**

1410

U(x+1,y)

Fx

U(x,y)

Fy

U(x,y+1)

1430

1440

**FIG.37B**

1420

U(x+1,y)

Gx

U(x,y)

Gy

U(x,y+1)

1450

1460

# FIG.38

ORIGIN (0, 0)    (Bx, By) ～ 1540

1510

透かし入り文書

透かし入り文書

透かし入り文書

透かし入り文書

透かし入り文書

透かし入り文書

透かし入り文書

透かし入り文書

透かし入り文書

透かし入り文書

透かし入り文書

Bh
1550

UPPER LEFT POSITION: (Ax, Ay)

WIDTH: Aw

HEIGHT: Ah

1520

Bw ～ 1560

1530

## INTERNATIONAL SEARCH REPORT

| | International application No. |
|---|---|
| | PCT/JP2005/017517 |

A. CLASSIFICATION OF SUBJECT MATTER
*H04N1/387* (2006.01)

According to International Patent Classification (IPC) or to both national classification and IPC

B. FIELDS SEARCHED

Minimum documentation searched (classification system followed by classification symbols)
*H04N1/387* (2006.01)

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 11-355547 A (International Business Machines Corp.), | 1,2,6,9,10, 14 |
| Y | 24 December, 1999 (24.12.99), Par. Nos. [0029] to [0057] & US 6671386 B1 | 3-5,7,8, 11-13,15,16 |
| X | JP 9-205542 A (Ricoh Co., Ltd.), 05 August, 1997 (05.08.97), | 1,2,6,9,10, 14 |
| Y | Par. Nos. [0017] to [0021] (Family: none) | 3-5,7,8, 11-13,15,16 |
| Y | JP 10-155091 A (Fuji Photo Film Co., Ltd.), 09 June, 1998 (09.06.98), Par. Nos. [0027] to [0049] (Family: none) | 3-5,11-13 |

☒ Further documents are listed in the continuation of Box C.　　☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 15 November, 2005 (15.11.05) | 22 November, 2005 (22.11.05) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2005/017517

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 2003-264685 A  (Oki Electric Industry Co., Ltd.),<br>19 September, 2003 (19.09.03),<br>Par. Nos. [0021] to [0034]<br>& US 2003/0169456 A1 | 7,8,15,16 |
| Y | JP 10-164549 A  (IBM Japan, Ltd.),<br>19 June, 1998 (19.06.98),<br>Par. Nos. [0016] to [0026]<br>& EP 0845758 A2 | 7,8,15,16 |
| A | JP 2004-179744 A  (Oki Electric Industry Co., Ltd.),<br>24 June, 2004 (24.06.04),<br>Par. Nos. [0017] to [0068]<br>(Family: none) | 1-16 |
| A | JP 2003-244427 A  (Canon Inc.),<br>29 August, 2003 (29.08.03),<br>Par. Nos. [0015] to [0087]<br>& US 2003/0123698 A1 | 1-16 |
| A | JP 2004-64516 A  (Kyodo Printing Co., Ltd.),<br>26 February, 2004 (26.02.04),<br>Par. Nos. [0069] to [0095]<br>(Family: none) | 1-16 |

Form PCT/ISA/210 (continuation of second sheet) (April 2005)

**EP 1 798 950 A1**

**REFERENCES CITED IN THE DESCRIPTION**

**Patent documents cited in the description**

- JP 2000232573 A